# EUROPEAN PATENT APPLICATION

(11) **EP 1 385 322 A1**
(43) Date of publication of application: **28.01.2004**
(21) Application number: 02714423.7
(22) Date of filing: 03.04.2002
(51) Int. Cl.: H04M 3/42, H04M 15/18, H04M 3/527, H04M 11/00

(54) **VOICE COMMUNICATION CONNECTION/CHARGING PROXY SUPPORT SYSTEM**

(30) Priority: 03.04.2001 JP 2001105181
(71) Applicant: Ueno, Toshiaki, Suita-shi, Osaka 565-0823 (JP)
(72) Inventor: Ueno, Toshiaki, Suita-shi, Osaka 565-0823 (JP)
(74) Representative: Cooper, John
(86) International application number: PCT/JP2002/003330
(87) International publication number: WO 2002/082791

(57) **Abstract**

A voice communication connection/charging proxy support system includes connection request reception means for receiving at web site a connection request specifying a voice communication call organization from a voice communication connection request organization, call connection means for calling voice telephone apparatuses of the voice communication connection request organization and the voice communication call organization and if response is received from both of them, connecting their voice telephone apparatuses to each other, and charging means for charging a beneficiary organization a communication

## Description

### FIELD OF THE INVENTION

The present invention relates to a voice communication connection/charging proxy support system, and the voice communication connection/charging proxy support system which calls a voice communication call organization by proxy of a voice communication connection request and also sets up the communication connection between them, and charges a beneficiary organization of either the voice communication connection request organization or the voice communication call organization, or both corresponding to a duration of a call between them.

### BACKGROUND OF THE ART

In accordance with the development of a telephone communication apparatus and the Internet in recent years, various kinds of methods of telephone line networks and telephone apparatuses have been developed and operated for service.

When the telephone apparatus is classified roughly, for example, a mobile phone apparatus and an Internet telephone apparatus can be mentioned in addition to the conventional individual telephone apparatus. In addition, each telephone apparatus, which is classified roughly in this way, is further classified into a plurality of methods.

Accordingly, a current public telephone line network is operated in service with a charging system where a telephone charge per unit time varies depending upon models of telephone apparatuses communicating with each other and a mutual distance between them.

Therefore, in a voice communication connection request organization of a user of a voice communication, the telephone charge per unit time differs depending upon the models of telephone apparatuses of the voice communication call organization and mutual distance therebetween, consequently, there is an inconvenience that an unexpected high-priced telephone charge must be born if the telephone charge is expensive.

### SUMMARY OF THE INVENTION

The present invention is carried out according to the lessons learned from these aspects, and it is an object to provide a voice communication connection/charging proxy support system to proxy a communication connection from the voice communication connection request organization to the voice communication call organization, and to charge a telephone charge per unit time at an almost uniform rate independently of the method of the telephone apparatus and the distance of the voice communication connection request organization and that of the voice communication call organization.

In order to achieve the object, the voice communication connection/charging proxy support system of the present invention comprises, connection request reception means for receiving on a website a connection request specifying the voice communication call organization from the voice communication connection request organization, call connection means for calling both of the voice telephone apparatuses of the voice communication connection request organization and the voice communication call organization and if responses are received from both of them, connecting their voice telephone apparatus to each other, charging means for charging a beneficiary organization the telephone charge corresponding to a duration of a call through both of the voice telephone apparatuses after the connection.

According to this present invention, when connection request reception means on the website of the voice communication connection/charging proxy support system receives a connection request specifying the voice communication call organization from the voice communication connection request organization, call connection means calls both of the voice telephone apparatuses of the voice communication connection request organization and the voice communication call organization, and if a response is received from both of them, connects lines connected to both of the voice telephone apparatuses and a communication is initiated, and charging means charges the beneficiary organization the telephone charge per unit time at an almost uniform rate in line with an agreement with the supporting system corresponding to the duration of a call through both of the voice telephone apparatuses after the connection.

In addition, the other voice communication connection/charging proxy support system of the present invention comprises, connection request reception means for receiving on the website a connection request specifying a voice communication call organization from a voice communication connection request organization, call connection means for calling, while maintaining a connection with the voice telephone apparatus of the voice communication connection request organization, the voice telephone apparatus of the voice communication call organization, and if a response is received from it, connecting both of the voice telephone apparatuses to each other, and charging means for charging the beneficiary organization a telephone charge corresponding to the duration of a call through both of the voice telephone apparatuses after the connection.

According to this present invention, when the connection request reception means on the website of the voice communication connection/charging proxy support system receives the connection request specifying the voice communication call organization from the voice communication connection request organization, the call connection means, maintaining the connection with the voice telephone apparatus of the voice communication connection request organization, calls the voice telephone apparatus of the voice communication call organization, and if a response is received from it, connects both lines to each other connected to both of the voice telephone apparatuses, and a communication is started therebetween, and the charging means charges the beneficiary organization the telephone charge per unit time at an almost uniform rate in line with an agreement of the supporting system corresponding to the duration of a call through both of the voice telephone apparatuses after the connection.

In addition, the voice communication connection/charging proxy support system of the present invention is characterized in that the beneficiary organization, to which the charging means charges the telephone charge, is one party of either the voice communication connection request organization or the voice communication call organization, or both parties.

The case where the beneficiary organization is to be the voice communication connection request organization is equivalent to the case of making a normal call, and obtaining a charged sound data by the phone apparatus or the like. In this case, a telephone charge per unit time at an almost uniform rate in line with the agreement with the supporting system is also charged to the voice communication connection request organization.

The voice communication call organization bears the telephone charge when the beneficiary organization is to be the voice communication call organization, which is equivalent to a case of a free dial where the voice communication connection request organization is not charged, and to a case where the voice communication connection request organization obtains free charge sound data, a commercial or the like by the telephone apparatus. In this case, a telephone charge per unit time at an almost uniform rate in line with the agreement with the supporting system is also charged to the voice communication call organization.

When the beneficiary organization is to be both the voice communication connection request organization and the voice communication call organization, both of them bear a corresponding telephone charge, which is equivalent to a case where teleconferencing is carried out between a plurality of individuals, and to a case where the voice communication connection request organization obtains a charge and free charge sound data or the like from the voice communication call organization by the telephone apparatus. In this case, a telephone charge per unit time at an almost uniform rate in line with the agreement with the supporting system is also charged to both of the voice communication connection request organization and the voice communication call organization, respectively.

In addition, the voice communication connection request organization can receive various kinds of sound information offers so that the voice communication call organization is constructed to be capable of offering sound information.

In addition, when the mobile phone apparatus, a wireless apparatus (including wireless LAN), a PDA or the like having a connection function to the Internet are used as the voice communication connection request organization, service of the voice communication connection proxy of the supporting system can be received at any time, anywhere.

In addition, by means of calling the website of the supporting system automatically on the mobile phone apparatus, or specifying the voice communication call organization by connecting operation auxiliary equipment thereto, which dials to the supporting system automatically, superior use operability is provided.

### BRIEF DESCRIPTION OF DRAWINGS

Fig. 1 is a block diagram showing one preferred embodiment of a supporting system in accordance with the present invention;
Fig. 2 is a plain view showing one example of a prepaid card;
Fig. 3 (a) through Fig. 3 (i) are illustrations showing user registration application procedures or the like;
Fig. 4 is an illustration showing mail for use in authentication of personal identification with respect to user registration;
Fig. 5 is a flowchart showing an operation of voice communication connection proxy in accordance with a supporting system;
Fig. 6 (a) through Fig. 6 (e) are illustrations showing examples of images displayed for a voice communication connection request organization when being operated in accordance with the present invention;
Fig. 7 is an illustration, further, showing the other example of a screen displayed for a voice communication connection request organization when being operated in accordance with the present invention;
Fig. 8 is an illustration, further, showing the other examples of a screen displayed for a voice communication connection request organization when being operated in accordance with the present invention;
Fig. 9 is an illustration showing E-mail content specifying a voice communication call organization;
Fig. 10 (a) through Fig. 10 (g) are illustrations showing International WEB free dial;
Fig . 11 (a) through Fig. 11 (i) are illustrations showing International WEB teleconferencing;
Fig. 12 is a block diagram showing a preferred embodiment of a sound information offer in accordance with a supporting system of the present invention;
Fig. 13 (a) through Fig. 13 (d) are illustrations showing a sound information offer by means of user registration;
Fig. 14 (a) and Fig. 14 (b) are illustrations showing a sound information offer without user registration;
Fig. 15 (a) through Fig. 15 (e) are illustrations showing execution of an dial i2;
Fig. 16 is a block diagram showing a preferred embodiment that makes calls to a Web Call Center in accordance with a supporting system of the present invention;
Fig. 17 (a) through Fig. 17 (h) are illustrations showing the other method of an initial registration;
Fig. 18 is an illustration showing a connection to a voice communication call organization while maintaining a connection to a voice communication connection request organization;
Fig. 19 (a) through Fig. 19 (c) are illustrations showing the other preferred embodiment of Fig. 18;
Fig. 20 (a) through Fig. 20 (c) are illustrations showing the other method of a sound information offer;
Fig. 21 is an illustration showing the other method for increasing a charge point;
Fig. 22 is an illustration showing a mobile phone apparatus and operation auxiliary equipment explaining a case of utilizing a supporting system by attaching the operation auxiliary equipment to the mobile phone apparatus;
Fig. 23 is block diagram showing one example of operation auxiliary equipment;
Fig. 24 is a sequence explaining operation procedures in Fig. 22;
Fig. 25 is a perspective view showing one example of a point adding device for adding a call point to operation auxiliary equipment 21; and
Fig. 26 is block diagram showing an exclusive unit in accordance with the present supporting system.

### PREFERRED EMBODIMENT OF THE PRESENT INVENTION

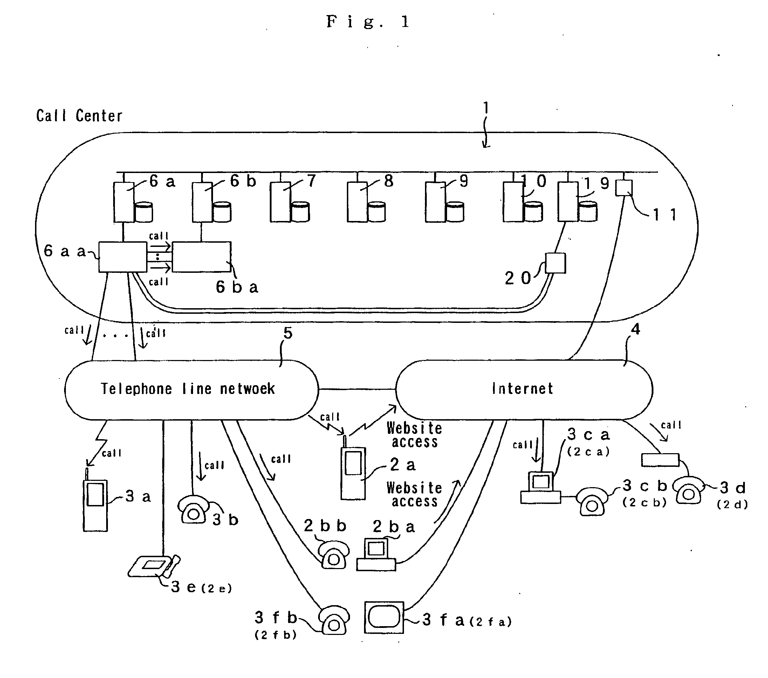

A description is made of a preferred embodiment of the present invention shown in Fig. 1 through Fig. 24 hereinafter.

Fig. 1 shows an entire configuration of one preferred embodiment of a voice communication connection/charging proxy support system of the present invention.

The voice communication connection/charging proxy support system 1 (called "supporting system" hereinafter) of the present embodiment is provided as shown in Fig. 1, and is configured so as to enable a bi-directional transmission of information and a voice communication between a plurality of voice communication connection request organizations 2 requesting a voice communication and a voice communication call organization 3 to be a called party of a voice communication through Internet 4 or various telephone line networks 5.

These voice communication connection request organization 2 and voice communication call organization 3 may be domestic or foreign.

Referring, further, thereto, the supporting system 1 includes a computer telephony integration server (CTI server) 6a, an Internet telephone server 6b, a WEB server 7, a database server (DB server) 8, an application server 9, a mail server 10, a router 11 and a translation server 19. Each server may be allocated at one site, or dispersed at a plurality of sites regardless of being domestic or foreign.

A PBX unit 6aa is connected to the CTI server 6a and a circuit unit 6ba is connected to the Internet telephone server 6b, which function as call connection means for connecting their voice telephone apparatuses to each other and made available for speaking, when both the voice telephone apparatuses of the voice communication connection request organization 2 and the voice communication call organization 3 are called over the telephone line network 5 and responses are received from both of them. This PBX unit 6aa is constructed to be capable of connecting to various lines through the telephone line network 5. As this type of network, an analog heavy-loaded network, an ISDN network, a dial-in network, a representative network, a personal handy phone system (PHS) tele-metering and a PHS network, a DoPa and a DoCoMo mobile phone network and a dial Q2 network can be mentioned.

The WEB server 7 is constructed to control the information transmission among the supporting system 1, the voice communication connection request organization 2 and the voice communication call organization 3.

The database server (DB server) 8 is constructed so as to store data with regard to the voice communication connection request organization 2 as a user of the supporting system 1 or a charging data of the supporting system 1.

The application server 9 is constructed so as to operate associated various servers 6, 7, 8, 10, 11, 19 composing the supporting system 1 and accessory equipment. Further referring thereto, the application server 9 carries out user management, charging management, and a communication management or the like. Concretely, it is constructed so as to carry out registration procedures as a customer of the supporting system 1 of the voice communication connection request organization 2, point registration procedures of a prepaid card for use in a payment of a charge, and a processing operation corresponding to accesses onto a website of the supporting system 1 from the voice communication connection request organization 2.

The mail server 10 is constructed so as to manage E-mail exchanging between the supporting system 1 and the voice communication connection request organization 2.

The router 11 is constructed so as to connect the Internet 4 to the supporting system 1.

The translation server 19 enables communication between the voice communication connection request organization 2 and the voice communication call organization 3 having different usage languages, concretely, is connected to the PBX 6aa of the CTI server 6a through a circuit unit 20, and is constructed so as to translate languages between the PBX 6aa.

Equipment having a function which can browse websites of the supporting system 1 may be used as the voice communication connection request organization 2, for example, a mobile phone apparatus 2a which can browse a website (for example, a mobile phone apparatus having i-mode and other Internet functions) as shown in Fig. 1, and telephone apparatuses 2bb, 2cb, 2d, 2e, and 2fb or the like linked with a personal computer 2ba connected to the Internet 4 can be mentioned.

Various telephone apparatuses having domestic or foreign voice communication functions can be mentioned as the voice communication call organization 3. Concretely, as an example of the voice communication call organization 3 as shown in Fig. 1, a mobile phone apparatus 3a and a fixed telephone apparatus 3b connected with the telephone line network 5, a telephone apparatus 3cb connected to the Internet 4 through a personal computer 3ca, an Internet telephone apparatus 3d, an L mode telephone apparatus 3e, and a TV with TV mode 3fa and a telephone apparatus 3fb or the like are mentioned. The telephone apparatus 3cb, the Internet telephone apparatus 3d, the L mode telephone apparatus 3e, and the telephone apparatus 3fb are utilized as the telephone apparatus 2cb of the voice communication connection request organization 2, the Internet telephone apparatus 2d, the L mode telephone apparatus 2e, the TV with TV mode 2fa, and the telephone apparatus 2fb, respectively (represented in () as supplemental symbols in Fig. 1).

When the voice communication connection request organization 2 and the voice communication call organization 3 are Internet telephone apparatuses, it is assumed that a registered identification number and telephone numbers are equivalently treated.

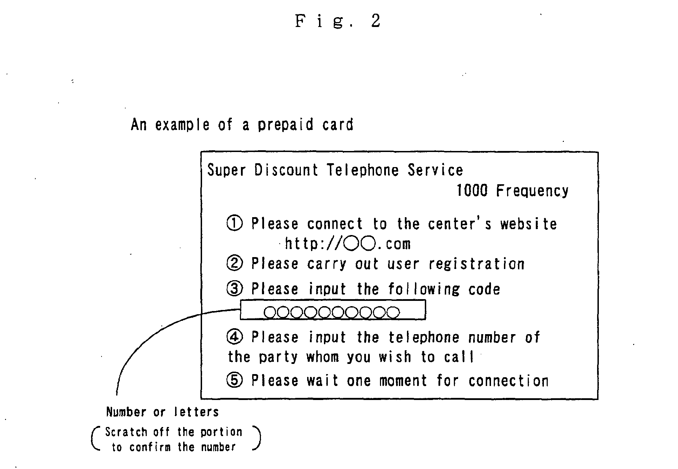

A description will be made of actions by a supporting system 1 in accordance with the preferred embodiment following Fig. 2.

First, it is preferable to carry out user registration beforehand when utilizing services of this supporting system 1.

For example, a user purchases a prepaid card beforehand and follows steps described on the card as shown in Fig. 2 when the user carries out user registration by a mobile phone apparatus 2a compatible with i-mode as a voice communication connection request organization 2. A prepaid card of Fig. 2 shows an example when a prepaid point is 1000.

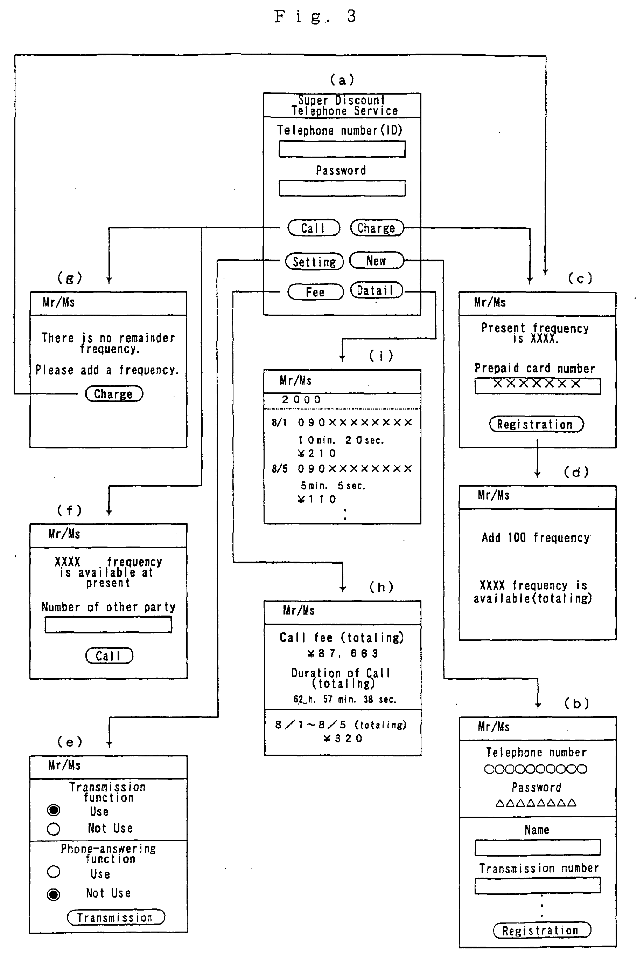

Next, when a mobile phone apparatus 2a is connected to a website of the supporting system 1 shown on a prepaid card, registration application procedures are displayed on the website as shown in Fig. 3 (a). Telephone numbers (ID) and a blank space for inputting a password and six buttons of a "Call," a "setting," a "fee," "charge," "new" and a "detail" are displayed in the application procedures.

Next, user registration is carried out. That is to say, the alphanumeric characters which the user wishes as the telephone numbers and password of the mobile phone apparatus 2a currently in use are inputted into the blank space of registration application procedures shown in Fig. 3 (a). When the user presses the "new" button at lower-right of the password of Fig. 3 (a), as a new registration screen shown in Fig 3 (b) is sent from the supporting system 1, registration operations are carried out by inputting a user name, voice communication telephone numbers of the telephone apparatus employed when the user communicates a voice communication, for example, telephone numbers of a mobile phone apparatus 2a and telephone numbers of the other telephone apparatus or the like, and a destination telephone number, then pressing the "registration" button.

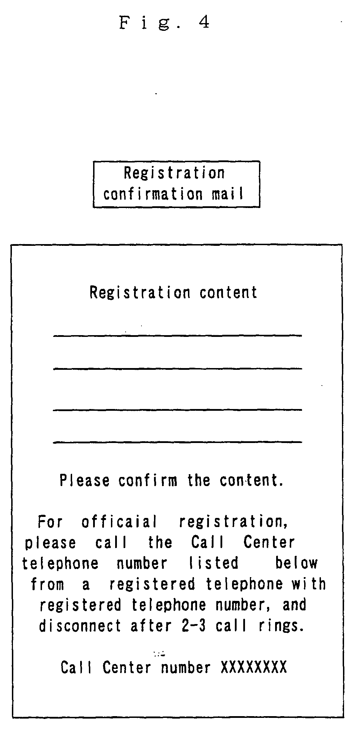

In response to this, a WEB server 7, a DB server 8, an application server 9, a mail server 10, and a router 11 and depending on need, a translation server 19 of the supporting system 1 operate and carry out user registration, and inform the input items in registration to the user by sending a registration confirmation mail to the mobile phone apparatus 2a as shown in Fig. 4. After confirming registered items of Fig. 4 to be correct, the user, by calling a specified telephone number of the supporting system 1 several times, then disconnecting the communication, may contact the supporting system 1 about telephone information regarding registration confirmation.

Next, returning to the screen shown in Fig. 3 (a), when the charge button located at the lower-right of the password is pressed, a current remaining frequency: 0000 and a screen for use in an input of a prepaid card number is transmitted from the supporting system 1 as shown in Fig. 3 (c). The voice communication connection request organization 2, then, inputs an individual code, which shows up by scratching and removing a coated film placed on the prepaid card of Fig. 2 as a prepaid card number, and subsequently, presses the "registration" button. In response to this, the WEB server 7, the DB server 8, the application server 9, the mail server 10 and the router 11 of the supporting system 1 operate and carry out registration of a prepaid point, and a screen showing a new added point: 1000 and a total available point: 1000 as shown in Fig. 3 (d) is transmitted to the mobile phone apparatus 2a. A code of the plurality of prepaid cards can be inputted as the input of prepaid card number. A telephone charge may be paid later depending on the use frequency instead of the prepaid system.

When the "setting" button under the "Call" of Fig. 3 (a) is pressed, it is constructed to be able to set a request of a transmission function or a phone-answering function as shown in Fig. 3 (e). Fig. 3 (e) shows a case where the transmission function is requested and the phone-answering function is not requested, the date is registered to the supporting system 1 by pressing the "transmission" button after the selection. If the transmission function is, then, requested, when the voice communication connection request is sent to the supporting system 1 from the voice communication connection request organization 2 specifying the user to be the voice communication call organization 3, the supporting system 1 is constructed so as to call a destination telephone number of the user already specif ied in Fig. 3 (b) as telephone numbers of the voice communication call organization 3. In addition, if the phone-answering function is registered, it is constructed so as, when the voice communication connection request is sent to the supporting system 1 from the voice communication connection request organization 2 specifying the user to be the voice communication call organization 3, to connect a line by making a call to the telephone numbers for use in the voice communication of the voice communication connection request organization 2, to operate the voice response memory device of the supporting system 1 (not shown), to transmit a recorded voice for use in the phone-answering of the user stored in the DB server 8, and to store a message of the voice communication connection request organization 2.

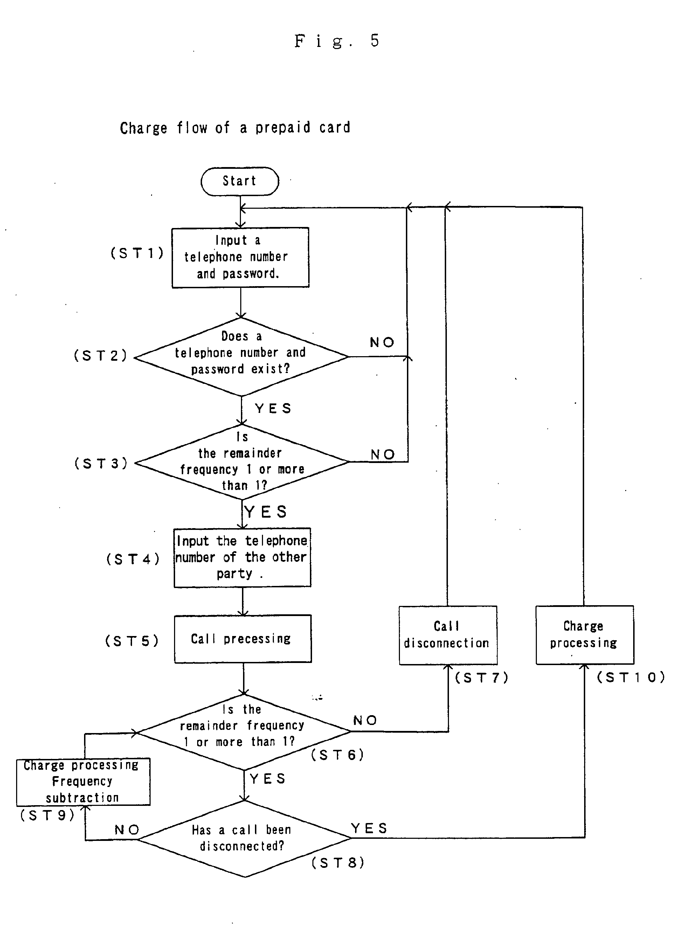

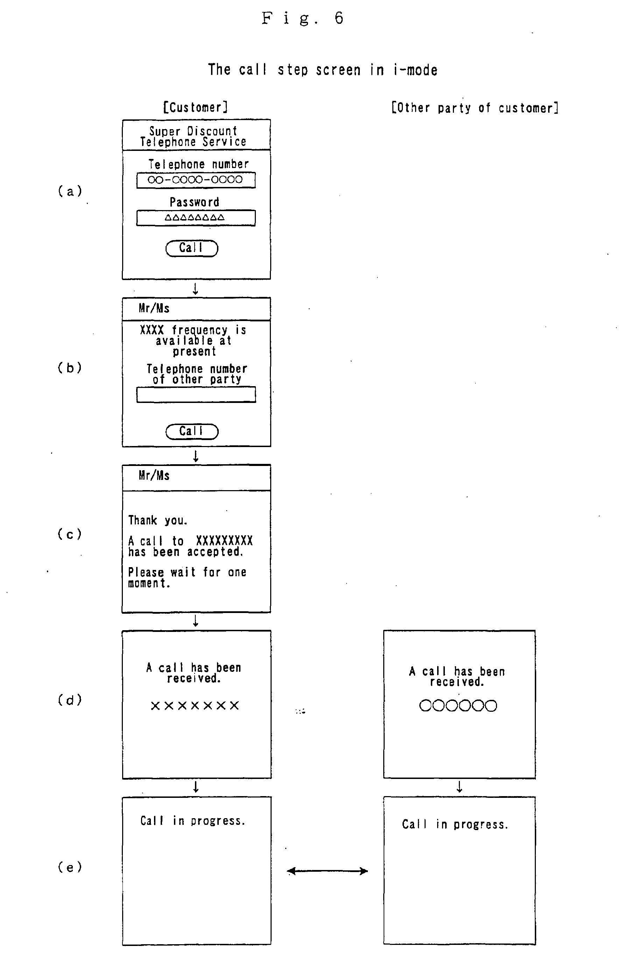

Next, a case where user registration is completed, the voice communication is carried out to the voice communication call organization 3 utilizing the supporting system 1 using the mobile phone apparatus 2a, and a telephone charge per unit time at an almost uniform rate in line with an agreement with supporting system 1 is also charged to voice communication connection request organization 2, will be explained in accordance with Fig. 5 and Fig. 6.

At Step ST1 in Fig. 5, first, the user calls a website of the supporting system 1 by operating the mobile phone apparatus 2a, and inputs the telephone numbers and password which have been registered by the user, and presses the "Call" button as shown in Fig. 6 (a).

Next, at Step ST2 in Fig. 5, in the supporting system 1 that receives an indication of Fig. 6 (a) on the website, the WEB server 7, the DB server 8, the application server 9, the mail server 10 and the router 11 operate and determine whether telephone numbers and password in a memory of the DB server 8 exist. If the determination is "NO," the flow returns to Step ST1, or if the determination is "YES," the flow proceeds to Step ST3 and the prepaid points, which the voice communication connection request organization 2 holds, is determined whether to be 1 or more than 1. If the determination is "NO," the flow returns to Step ST1, or if the determination is "YES, " the flow proceeds to Step ST4.

At step 4, the supporting system 1 sends the input screen for inputting current prepaid point counts and telephone numbers of the voice communication call organization 3 as shown in Fig. 3 (f) and Fig. 6 (b) to the mobile phone apparatus 2a as a user. In the mobile phone apparatus 2a to be the user, the user inputs the telephone numbers of the voice communication call organization 3, then proceeds to Step ST5, and presses the "Call" button.

Next, in the supporting system 1 that receives the indication of Fig. 3 (f) and Fig. 6 (b) on the website, the WEB server 7, the DB server 8, the application server 9, the mail server 10 and the router 11 operate, and send a screen displaying that the communication request to the telephone numbers of the voice communication call organization 3 of Fig. 6 (c) to mobile phone apparatus 2a to be the user is received.

Subsequently, the supporting system 1 operates the CTI server 6a, and makes calls to the telephone numbers of the telephone apparatus used in the voice communication registered beforehand in Fig. 3 (telephone number of the mobile phone apparatus 2a in the present embodiment) for one user as shown in Fig. 6 (d). Further, the supporting system makes calls to other telephone numbers of the voice communication call organization 3 specified in Fig. 6 (b), for example, the mobile phone apparatus 3a.

Subsequently, the supporting system 1 operates the CTI server 6a, and connects a line connected to mobile phone apparatus 2a and a line connected to the mobile phone apparatus 3a to enable a direct voice communication as shown in Fig. 6 (e).

Thus, when the voice communication connection request organization 2 starts the voice communication to the voice communication call organization 3, at Step ST6, the prepaid points, which the voice communication connection request organization 2 holds, is determined to be 1 or more than 1. If the determination is "NO," the flow proceeds to Step ST7 and it forcibly disconnects the communication, then the flow returns to Step ST1, if the determination is "YES," the flow proceeds to Step ST8.

At Step 8, it is determined whether the communication is disconnected. If the determination is "NO," then the flow proceeds to Step ST9, and the prepaid point is subtracted corresponding to the length of duration of the call as a result of charge processing, and the flow returns to Step ST6 and the communication is continued.

When the voice communication between the voice communication connection request organization 2 and the voice communication call organization 3 is completed by disconnection of the communication either by organization 2 or 3, a determination of Step ST8 becomes "YES," then the flow proceeds to ST10, charge processing to the voice communication connection request organization 2 is carried out, and remaining point counts of the prepaid point is stored in the DB server 8, then the flow returns to step ST1.

In addition, when there is no prepaid point at Step ST3 of Fig. 5, a screen indicating that there is no remaining frequency as shown in a Fig. 3 (g) is sent from the supporting system 1 to the voice communication connection request organization 2. When the voice communication connection request organization 2 presses the "charge" button then, as the screen of Fig. 3 (c) is displayed, it is preferable to purchase a new prepaid card, input a new prepaid card number and recover the status available for the voice communication. In addition, operations of a prior notice that prepaid points are few, for example, operations for inserting an audible tone into the voice communication line or the like may be carried out between Step ST6 and ST7 in Fig. 5.

In addition, the voice communication connection request organization 2, when checking fees needed for the voice communication, can confirm these by pressing the "fee" button at the lower-left as in Fig. 3 (a) and receiving a screen showing a total telephone charge, a total duration of the call and a total charge during predetermined period up until that time then as shown in Fig. 3 (h) from the supporting system 1.

In addition, the voice communication connection request organization 2, when checking detailed billing needed for the voice communication on a daily basis, can confirm these by pressing the "detail" button at lower-right in Fig. 3 (a), then receiving a screen showing the total telephone charge and the total duration of the call on a day when the voice communication has been carried out on a daily basis as shown in Fig. 3 (i) from the supporting system 1.

According to the present embodiment as explained above, when various servers as connection request reception means on the website of the supporting system 1 receive the connection request specifying the voice communication call organization 3 from the voice communication connection request organization 2, the CTI server 6a or the like as call connection means calls both of the voice telephone apparatuses 2a and 3a of the voice communication connection request organization 2 and the voice communication call organization 3, connects the lines connected to both of the voice telephone apparatuses 2a and 3a with each other, and the communication is started if the response is received from both of these, and charging means charges the voice communication connection request organization 2 a telephone charge per unit time at an almost uniform rate in line with an agreement with supporting system 1 corresponding to the duration of the call through both of the voice telephone apparatuses 2a and 3a after the connection. In addition, by making the telephone charge per unit time that the supporting system 1 charges more inexpensive than a charging amount when a direct communication from the voice communication connection request organization 2 to the voice communication call organization 3 through the telephone line network 5 and the Internet 4, it is possible for the voice communication connection request organization 2 being the user to achieve a significant cost reduction.

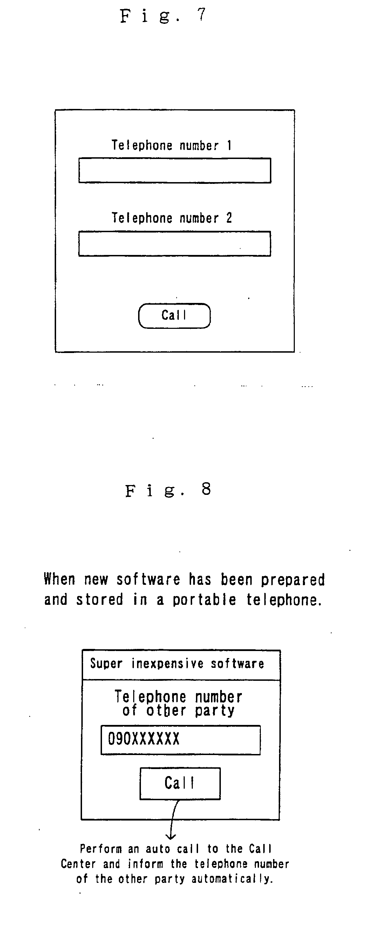

In addition, for the voice communication request by the voice communication connection request organization 2, in order to enable mutual voice communication between two organizations of a third party except the user, the communication may be provided by inputting telephone numbers 1 and 2 as shown in Fig. 7. In this case, the supporting system 1 enables voice communication by carrying out a similar connection operation as in the above description to the two organizations specified in fields of the telephone numbers 1 and 2.

In addition, in order for the user who completes user registration, to simplify a specified operation of the voice communication call organization 3, it is preferable that software programs designed in the supporting system 1 is downloaded to the mobile phone apparatus 2a and the personal computer 2ba for the user to utilize and install them manually, a communication software screen to the supporting system 1 is booted up on the mobile phone apparatus 2a or the like to be displayed as shown in Fig. 8, similar information as the operation shown in Fig. 6 (a) and Fig. 6 (b) is transmitted to the supporting system 1 when pressing the call button by inputting telephone numbers of the voice communication call organization 3, and consequently, the supporting system 1 starts the voice communication connection operation to the voice communication connection request organization 2 and the voice communication call organization 3 similar to that described above.

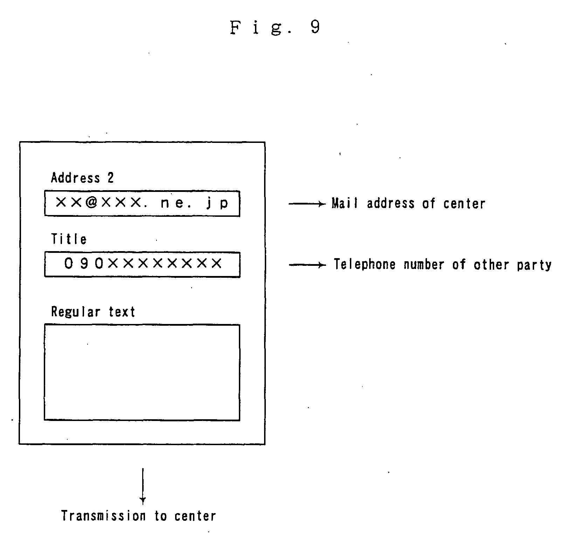

In addition, in order, for the user who completes user registration, to enable the specified operation of the voice communication call organization 3 by E-mail, it is preferably constructed that an E-mail address of the user is registered in user registration beforehand, when the E-mail, on which the E-mail address of the supporting system 1 and the telephone numbers of the voice communication call organization 3 are inputted, is sent to the address of the supporting system 1 as shown in Fig. 9, the supporting system 1 calls both of telephone numbers to be utilized as the voice communication connection request organization 2 of the user and the telephone numbers of the specified voice communication call organization 3 and, the voice communication connection operation to the voice communication connection request organization 2 and the voice communication call organization 3 are started similar to the above description.

In addition, for the user who completes user registration, it may be possible to request connection to the supporting system 1 without specifying the voice communication call organization 3, to transmit to the other party to the supporting system 1 by inputting the telephone numbers of the voice communication call organization 3 after the call from the supporting system 1 to the voice communication connection request organization 2 is received, to call the voice communication call organization 3, and to start the communication.

The supporting system 1 may send a voice response to urge the telephone numbers to be inputted if the call is received from the supporting system 1.

In addition, it is possible for the user of the voice communication connection request organization 2 to search telephone number data stored in the DB server 8 on the website of the supporting system 1 depending upon a key word, a business type, a category, an area or the like, to have the same effect as obtained when inputting telephone numbers of the other party as the voice communication call organization 3 by clicking a telephone number portion displayed in search results, to start the voice communication connection operation by this system.

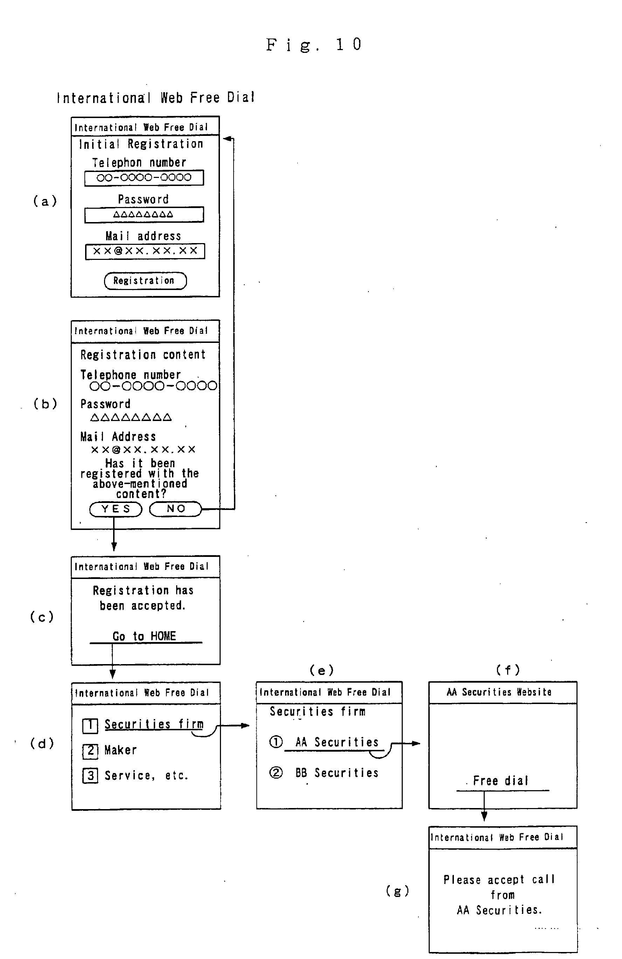

Next, an embodiment of the utilization of this supporting system 1 corresponding to an International WEB free dial will be explained in accordance with Fig. 10.

In the International WEB free dial, a telephone charge is not charged to a voice communication connection request organization 2, but a telephone charge per unit time at an almost uniform rate in line with an agreement with supporting system 1 is charged to a voice communication call organization 3 called by a voice communication connection request organization 2.

It is preferable to carry out user registration beforehand when utilizing the service of the International WEB free dial.

For example, when connecting to a website of the supporting system 1 displayed on a notice medium of the supporting system 1 using a mobile phone apparatus compatible with i-mode 2a as the voice communication connection request organization 2, registration application procedures of the International WEB free dial as shown in Fig. 10 (a) are displayed on the website.

Blank spaces for inputting telephone numbers (ID), password and mail addresses or the like and a "registration" button are listed in the application procedures.

Next, user registration of the International WEB free dial is carried out. That is, in the blank spaces of registration application procedures for initial registration shown in Fig. 10 (a), the telephone number of the mobile phone apparatus 2a currently in use, alphanumeric characters which the user wishes to use as password, and a mail address or the like are input, then the "registration" button under the mail address of Fig. 10 (a) is pressed. In response to this, a WEB server 7, a DB server 8, an application server 9, a mail server 10 and a router 11, and as necessary, a translation server 19 of the supporting system 1 operate to carry out user registration of the International WEB free dial, send a registration confirmation screen including a new registration screen as shown in Fig. 10 (b) to the mobile phone apparatus 2a, and inform of input items in registration of the International WEB free dial to the user. The user confirms whether registered items of Fig. 10 (a) are correct. When registration content is not correct, the user presses a "NO" button and repeats the input in Fig. 10 (a) to correct the registration content. When confirming that the registration content is correct, the user press a "YES" button in Fig. 10 (b) to complete the registration operation. Thus, the supporting system 1 displays a registration confirmation screen comprising a registration reception completion screen as shown in Fig 10 (c) on the mobile phone apparatus 2a, and informs that the International WEB free dial is available for use returning to the website of the supporting system 1 to the voice communication connection request organization 2 to be the user. When the voice communication connection request organization 2 that has completed user registration calls a page of the International WEB free dial shown in Fig. 10 (d) of the website of the supporting system 1 utilizing the i-mode by means of the owned mobile phone apparatus 2a, and clicks and specifies a button or a link of, for example, a securities firm requested for free dial, a page of the securities firm as shown in Fig. 10 (e) is sent to the mobile phone apparatus 2a by the supporting system 1. When a button or a link of, for example, AA Securities is clicked and specified here, a screen page as shown in Fig. 10 (f) is sent to the mobile phone apparatus 2a by the supporting system 1, and when a button or a link of a free dial is clicked, a screen page as shown in Fig. 10 (g) is sent to the mobile phone apparatus 2a by the supporting system 1, a message stating "Please wait one moment for a call from AA Securities after hanging up." is transmitted to the telephone apparatus 2a.

Subsequently, the supporting system 1 also operates the CTI server 6a, and makes calls to telephone numbers of telephone apparatuses 3b, 3cd, 3d, 3e and 3fb corresponding to the International WEB free dial registered beforehand of the AA Securities firm to be the voice communication call organization 3 specified in Fig. 10 (e). Subsequently, it makes calls to telephone numbers of the telephone apparatus used in the case of the International WEB free dial registered beforehand in Fig. 10 (a) to the user (telephone number of the mobile phone apparatus 2a in the present embodiment). Subsequently, the supporting system 1 operates the CTI server 6a, and connects a circuit connected to telephone apparatuses 3b, 3cb, 3d, 3e and 3fb to a circuit connected to the portable telephone apparatus 2a to enable a direct voice communication. In addition, the sequence of the communication calling may be reversed.

Thus, the voice communication using the International WEB free dial is initiated between the voice communication connection request organization 2 and the voice communication call organization 3.

The voice communication between the voice communication connection request organization 2 and the voice communication call organization 3 using the International WEB free dial is completed by call disconnection of either organizations 2 or 3, then the supporting system 1 carries out charge processing to AA Securities firm as voice communication call organization 3. Therefore, a telephone charge is not charged to the voice communication connection request organization 2 and becomes free.

Thus, since the International WEB free dial can provide free dial service utilizing the Internet, the international free dial service can be provided regardless of whether locations of the voice communication connection request organization 2 and the voice communication call organization 3 are domestic or foreign. In addition, as the voice communication connection request organization 2 and the voice communication call organization 3, telephone apparatuses 2bb, 2cb, 2d, 2e, 2fb, 3cb, 3d, 3e, and 3fb may be used other than that described above.

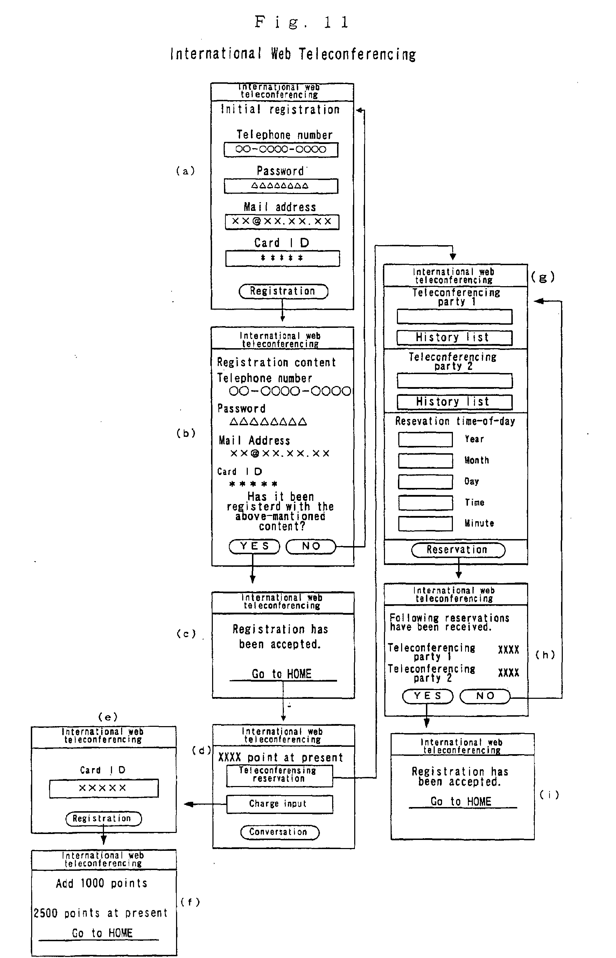

Next, an embodiment utilizing the supporting system 1 corresponding to International WEB teleconferencing will be explained in accordance with Fig. 11.

In International WEB teleconferencing, teleconferencing is carried out for a voice communication connection request organization 2 to specify one or a plurality of voice communication call organizations 3 which request International WEB teleconferencing. A telephone charge in this case is singly charged to the voice communication connection request organization 2, or correspondingly charged to the voice communication connection request organization 2 and the voice communication call organization 3 which participate in International WEB teleconferencing, and a telephone charge per unit time at an almost uniform rate in line with an agreement with the supporting system 1 is charged.

It is preferable to carry out user registration beforehand when utilizing services of International WEB teleconferencing.

For example, when connecting to the website of the supporting system 1 displayed on a notice medium of the supporting system 1 by a mobile phone apparatus compatible with i-mode 2a as the voice communication connection request organization 2, registration application procedures of International WEB teleconferencing as shown in Fig. 11 (a) are displayed on the website . Blank spaces for inputting telephone numbers (ID), password, mail addresses and a card ID of a prepaid card and a "registration" button are listed in the application procedures.

Next, user registration of International WEB teleconferencing is carried out. That is, a telephone number of the mobile phone apparatus 2a in use currently, alphanumeric characters which the user wishes to use as a password; a mail address, and a card ID of a prepaid card or the like are input into the blank spaces of the registration application procedures for initial registration as shown in Fig. 11 (a), and the "registration" button under the mail address of Fig. 11 (a) is pressed. In response to this, a WEB server 7, a DB server 8, an application server 9, a mail server 10, and a router 11 and if necessary, a translation server 19 of the supporting system 1 operate to carry out user registration of International WEB teleconferencing, send a registration confirmation screen consisting of a new registration screen as shown in Fig. 11 (b) to the mobile phone apparatus 2a, and inform the user of input items in registration of International WEB teleconferencing. The user confirms whether registered items of Fig. 11 (a) are correct. When registration content is not correct, the user presses the "NO" button and repeats the input in Fig. 11 (a) to correct the registration content. When confirming that the registration content is correct, the user presses a "YES" button in Fig. 11 (b) to complete the registration operation. Thus, the supporting system 1 sends a registration confirmation screen including a registration reception completion screen as shown in Fig. 11 (c) to the mobile phone apparatus 2a, and informs the voice communication connection request organization to be the user that International WEB teleconferencing is available for use by returning to the website of supporting system 1. The voice communication connection request organization 2 which has completed user registration calls a page of International WEB teleconferencing shown Fig. 11 (d) of the website of the supporting system 1 utilizing an i-mode by the owned mobile phone apparatus 2a. On the page, point counts which a current prepaid card can charge, a teleconferencing reservation button, a charge button, and a teleconferencing button are displayed from the top in sequence.

The user confirms the point counts which the current prepaid card can charge, when point counts show slight deficiency, presses the charge button on the screen shown in Fig. 11 (d) to display a screen of Fig. 11 (e), purchases a new prepaid card, inputs a card ID number of a new prepaid card, and presses the "Registration" button. Thus, a screen which shows new additional points: 1000 and total available counts for use: 1000 shown in Fig. 11 (f) is sent to the mobile phone apparatus 2a. When pressing the website button on this screen, the screen returns to the screen shown in Fig. 11 (d).

Subsequently, the user presses the teleconferencing reservation button on a screen shown in Fig. 11 (d) to reserve teleconferencing. When the user presses the teleconferencing reservation button, the screen for the teleconferencing reservation shown in Fig. 11 (g) is sent to mobile phone apparatus 2a from the supporting system 1, the user, therefore, inputs a party on the other end of the International WEB teleconferencing according to the display instructions. Since two individuals as a party on the other end of the teleconferencing can be inputted on the screen, the user newly inputs telephone numbers of the party on the other end, or selects and specifies the telephone number of the party on the other end from a history list box. In addition, when there are three or more than three parties on the other end of the teleconferencing, the user clicks a party adding button to input additional parties. In addition, a viewing of the party on the other end of the teleconferencing is for one party and two or more than two parties may be added to it. Further, the user inputs and specifies year, month, day, hour, minute of the teleconferencing schedule of International WEB teleconferencing in sequence into the blank spaces, and presses the reservation button. In response to this, a WEB server 7, a DB server 8, an application server 9, a mail server 10, and a router 11 and if necessary, a translation server 19 of the supporting system 1 operate to carry out the reservation of International WEB teleconferencing, send a reservation reception screen as shown in Fig. 11 (h) to the mobile phone apparatus 2a to inform the user of input items in a teleconferencing reservation of International WEB teleconferencing. The user confirms whether reservation items of Fig. 11 (g) are correct. When the reservation content is not correct, the user presses the "NO" button and repeats the input in Fig. 11 (g) to correct the reservation content. When confirming that the reservation content is correct, the user presses the "YES" button in Fig. 11 (h) to complete the reservation processing. Thus, the supporting system 1 sends the reservation confirmation screen consisting of the reservation reception completion screen as shown in Fig . 11 ( i ) to the mobile phone apparatus 2a, informs that International WEB teleconferencing is available for use returning to the website of the supporting system 1 to the voice communication connection request organization 2 to be the user.

Subsequently, the supporting system 1, according to the reservation schedule, operates the CTI server 6a when the teleconferencing start time of International WEB teleconferencing arrives, and calls telephone numbers of the voice communication call organization 3 to be the specified party on the other end of the teleconferencing in Fig. 11 (g). Subsequently, for the user, the supporting system calls telephone numbers of a telephone apparatus (telephone number of the mobile phone apparatus 2a in the present embodiment) used during International WEB teleconferencing registered beforehand in Fig. 11 (a). Subsequently, the supporting system 1 operates CTI server 6a, and connects a line connected to the telephone apparatus of the voice communication call organization 3 to be the party on the other end of the teleconferencing and to a line connected to mobile phone apparatus 2a to enable a direct voice communication. In addition, an order is not restricted by the order described above, but may be variously changed.

Thus, the voice communication using an International WEB teleconferencing is initiated between the voice communication connection request organization 2 and the voice communication call organization 3. In addition, although the mobile phone apparatus 2a of the voice communication connection request organization 2 indicates the supporting system 1 to display a screen shown in Fig. 11 (d) when the voice communication connection request organization 2 cannot take a call at the teleconferencing start time, or disconnection occurs unexpectedly during the teleconferencing, it is possible to participate in the teleconferencing promptly by pressing the teleconferencing button at the bottom of the screen shown in Fig. 11 (d).

The voice communication through International WEB teleconferencing between the voice communication connection request organization 2 and the voice communication call organization 3 is completed as a result of a call disconnection by either organizations 2 or 3, the supporting system 1 charges only to the voice communication connection request organization 2, or correspondingly charges to the voice communication connection request organization 2 and the voice communication call organization 3 which have participated in International WEB teleconferencing. In addition, the charge processing from Step ST6 through ST10 in Fig. 5 is carried out during the communication.

Thus, International WEB teleconferencing can provide teleconferencing service utilizing the Internet, so International WEB teleconferencing service can be provided regardless of whether locations of the voice communication connection request organization 2 and the voice communication call organization 3 are domestic or foreign. In addition, as the voice communication connection request organization 2, the telephone apparatuses 2bb, 2cb, 2d, 2e and 2fb other than that described above may also be used.

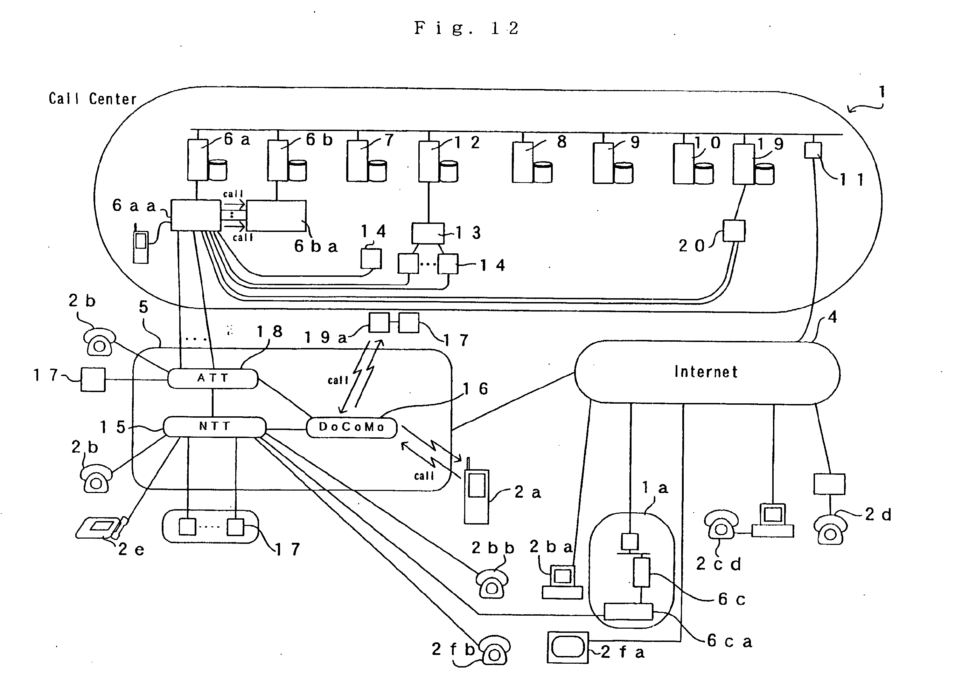

Next, an embodiment utilizing the supporting system 1 corresponding to a sound information offer will be explained in accordance with Fig. 12 through Fig. 15.

In the sound information offer, a sponsor providing sound information such as sound data and a sound commercial (CM) or the like linking with supporting system 1 exists, a voice communication connection request organization 2 can receive the sound information through the supporting system 1 on a free or chargeable basis.

Fig. 12 shows a block diagram when the voice communication connection request organization 2 carries out user registration to receive the sound information offer to the supporting system 1. Like portions in Fig. 1 are given to the same reference numerals.

The present embodiment shows a case where the supporting system 1 is installed in the United States and the supporting system 1a is installed in Japan.

In one supporting system 1, a sound information server 12 and a D/A conversion unit 13 are arranged to provide the sound information through the Internet 4 and a router 11, an internal sound information 14 and the internal sound information 14 connected to the D/A conversion unit 13 is individually connected to deliver it through a PBX unit 6aa of a CTI server 6a. In addition, the PBX unit 6aa is connected to an ATT line network 18 in a telephone line network 5 and is further connected to an NTT line network 15 and an NTT DoCoMo line network 16.

The other supporting system 1a is connected to the NTT line network 15 in the telephone line network 5 through the PBX unit 6ca of the CTI server 6c, and is further connected to the ATT line network 18 and the NTT DoCoMo line network 16.

External sound information 17 outside of the supporting system 1 is connected to the NTT line network 15 and the ATT line network 18 in the telephone line network 5, respectively. Further, the external sound information 17 is installed to deliver it in the NTT DoCoMo line network 16 through a DoPa unit 19.

A voice communication call organization 3 to be the sponsor provides the sound information 14 and 17 to be delivered beforehand.

Next, the case where the sound information offer is provided by user registration using a mobile phone apparatus compatible with i-mode 2a is explained.

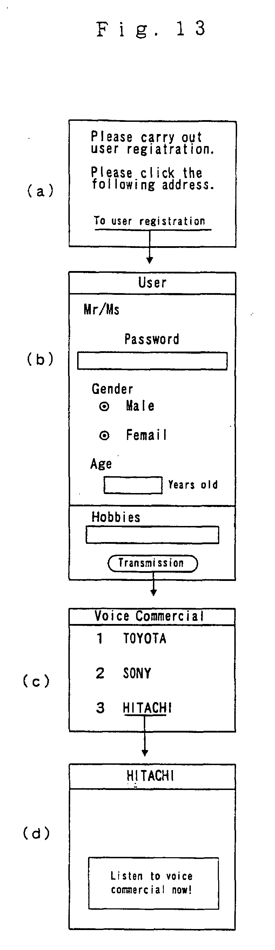

The voice communication connection request organization 2 who requests the sound information offer calls, for example, the supporting system 1a displayed on a notice medium of the supporting system 1 using the mobile phone apparatus compatible with i-mode 2a, then hangs up. In response to this, the CTI server 6c of the supporting system 1a obtains a telephone number of the mobile phone apparatus 2a by a sender number notice, sends an indication to a mail server 10 to transmit mail shown in Fig. 13 (a) to an address consisting of "the telephone number @docomo.ne.jp" to recommend user registration. When the user clicks the "to user registration" button in Fig. 13 (a) and completes user registration, and again the supporting system 1 transmits a user registration screen as shown in Fig. 13 (b) to the mobile phone apparatus 2a, the server requests the user to input a password, gender, a full name, an address, an age, and hobbies for use in the sound information offer. When the input of user registration is completed by the user, a website including the telephone number is automatically generated in the supporting system 1 for each user, and the user connects to the supporting system 1 with i-mode, opens a page of the sound information offer, and can receive the sound information offer. Concretely, the sound information offer page as shown in Fig. 13 (c) (illustration shows a voice CM offer) is transmitted to the user, the sound offer becomes available for the user to press a button which provides the sound information offer requested by the user.

When requesting a sound information offer, the voice communication connection request organization 2 clicks a desired object from, for example, the sound information offer page shown in Fig. 13 (c) using i-mode of the mobile phone apparatus 2a, opens a CM page of the sponsor which is a selection object as shown in Fig. 13 (d), and clicks a button or a link of the sound information offer displayed as "Listen to voice CM now!"

The WEB server 7 of the supporting system 1 receives a call of mobile phone apparatus 2a of a user and a program of sound information which requested a reception. Subsequently, the CTI server 6a calls the mobile phone apparatus 2a of the user, confirms that the user takes a call, and connects the program of the sound information requested thereto. When the sound information requested is data in the supporting system 1, the internal sound information 14 is connected immediately and is provided to the user. When the sound information requested is data outside of the supporting system 1, after dialing numbers of the external sound information 17 to be a requested object and confirming the connection, the CTI server 6a connects the external sound information 17 to the mobile phone apparatus 2a, and provides the external sound information 17 to the user.

The sound information offer is, for example, around 1 minute and may be preferably used as a company CM or a trial listen of a music CD or the like. In this case, the communication is automatically disconnected and the telephone charge is charged to the sponsor.

In addition, chargeable sound information is prepared and the voice communication connection request organization 2 that receives the sound information offer may be charged therefore.

Thus, telephone numbers and a mail address of the user, who carries out user registration for the sound information offer, can be collected. It can be utilized as an address list for many kinds of information thereafter.

In addition, by adding a sound information listening point to a user who has listened to the sound information such as a CM or the like, the point may be passed on to the user as a commemorative gift, a telephone charge or the like.

Further, for a buyer of general goods or services, by providing a purchase point including, for example, a unique ID number given to the goods, which is not duplicated, or the like, and by converting to the point by means of delivering the purchase point utilizing the website or the like to the server side similar to that described above, it may be possible to pass on a listening right of the sound information, a commemorative gift, cash, telephone charge or the like to the buyer, or to exchange them with other service points.

In addition, it may be possible to solicit a sponsor by launching a portal site with regard to the sound information offer, for example, the voice CM offer in the supporting system 1. In this case, it may be preferable to have a sound information offer site having high utility value for the user by soliciting sponsors according to each business type. In this case, as the portal site raises the advertisement value such as banner ads, the advertisement business may also be possible.

A case of receiving the sound information offer without carrying out user registration using the mobile phone apparatus compatible with i-mode 2a in Fig. 12 will now be explained. A state where the supporting system 1a is arranged in addition to the supporting system 1 is shown in Fig. 12, and the supporting systems 1 and 1a are arranged at different sites, that is to say, different countries in the present embodiment, however these are arranged at the same site.

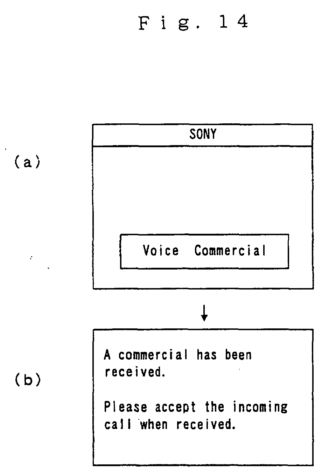

When the voice communication connection request organization 2 requesting the sound information offer, which has not made user registration, clicks either sound information as shown in Fig. 14 (a) on the website which, for example, one supporting system 1a provides using the mobile phone apparatus compatible with i-mode 2a to call the supporting system 1a, and hangs up, the supporting system 1 transmits a screen or mail stating "The CM has been received. Please accept the incoming call when received" as shown in Fig. 13 (b) to the mobile phone apparatus 2a. Please accept the incoming call when received. Simultaneously, the CTI server 6c of the supporting system 1a obtains the telephone number of the mobile phone apparatus 2a through a dial-in network by a sender number notice, and simultaneously, the voice communication connection request organization 2 obtains the telephone number of the requested sound information program. Next, the telephone number of the mobile phone apparatus 2a and the telephone number of the sound information program obtained by the CTI server 6c are transmitted from the CTI server 6c of the supporting system 1a to the CTI server 6a of the other support center 1 via the Internet 4. In response to this, the CTI server 6a of the support center 1 calls the telephone number of the mobile phone apparatus 2a via a line network which is required for a connection in the telephone line network 5 (ATT line network 18 and NTT DoCoMo line network 16 in the present embodiment). When the mobile phone apparatus 2a which receives the call takes the call, the CTI server 6a of the support center 1 connects the mobile phone apparatus 2a to the sound information program, and the voice communication connection request organization 2 can receive the sound information offer from the requested sound information program. Offered sound information other than that connected to the sound information server 12 of the support center 1, for example, connected to the NTT line network 15, the Dopa 19 and ATT line network 18 in the telephone line network 5 can be utilized. In addition, the sound information, whose telephone charge is free or chargeable to the voice communication connection request organization 2, is offered. It is preferable for the voice communication connection request organization 2 to call in a payable state such as using a prepaid card when receiving the chargeable sound information offer.

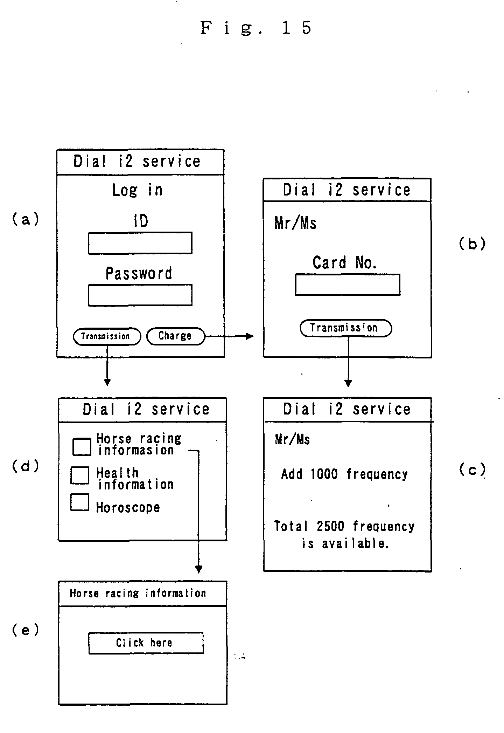

In addition, the supporting systems 1 and 1a can provide the chargeable sound information offer service as, for example, a "dial i2 service." Fig. 15 shows one example of the dial i2 service. The supporting system 1 launches a page of the dial i2 service as shown in Fig. 15 (a) on the website. The voice communication connection request organization 2 opens the page using the mobile phone apparatus compatible with i-mode 2a, inputs an ID and password into the blank spaces, and further confirms chargeable point counts of the current prepaid card, when the point counts show a slight deficiency, presses a charge button of a screen shown in Fig. 15 (a) to display a screen of Fig. 15 (b), purchases a new prepaid card, inputs the card ID number of the new prepaid card, and presses a "registration" button. Thus, a screen which shows new additional points: 1000, and total available points for use: 2500 shown in Fig. 15 (c) is transmitted to the mobile phone apparatus 2a. When pressing a website button on the screen, the screen returns to Fig. 15 (a). Subsequently, a transmission button of Fig. 15 (a) is pressed. Thus, the page which contains many programs of the sound information as shown in Fig. 15 (d) is transmitted to the mobile phone apparatus 2a by the supporting system 1. The voice communication connection request organization 2 presses for a selection program button, which provides requested sound information, on the pages. Thus, as a screen of the selected sound information program shown in Fig. 15 (e) is transmitted to the mobile phone apparatus 2a by the supporting system 1, the user presses a button "Click here" and disconnects the line. Thereafter, the sound information offer is carried out similar to a case of receiving the sound information offer which has made user registration. In addition, by registering a page of Fig. 15 (b) to the mobile phone apparatus 2a as a bookmark, the user can retrieve the bookmark and easily receive the sound information offer in utilizing sound information after the second time.

In this case, the supporting system 1 or 1a proxies a provider of the sound information and collects a utilization fee from the user, and makes payment to the provider after deducting a service fee. The supporting system 1 or 1a takes an initial expense from the sound information provider, prepares equipment and collects equipment rental charges for a fixed period, and can provide a service similar to a so called dial Q2 service of NTT.

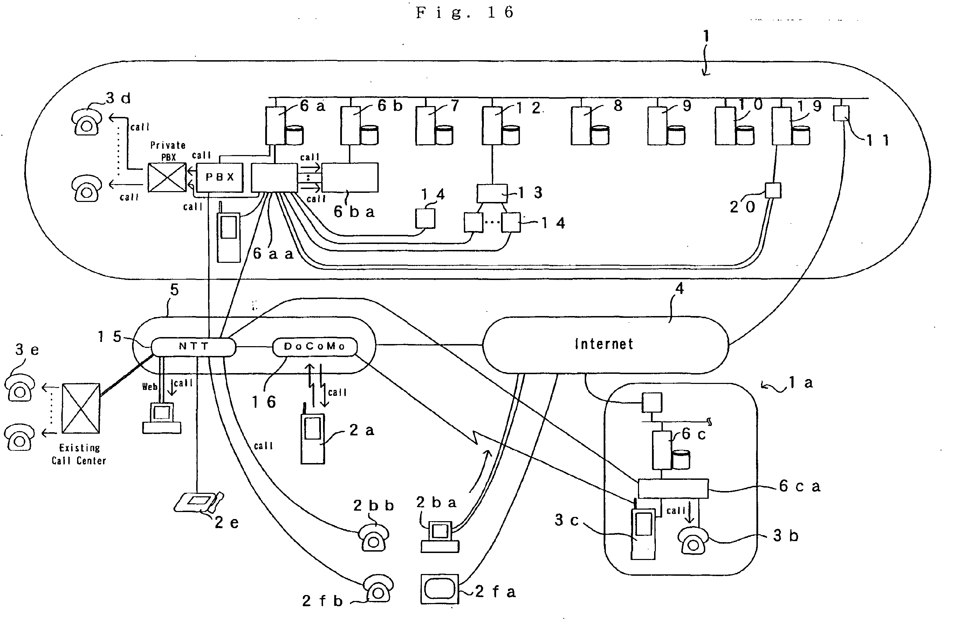

Fig. 16 shows a case where the supporting system 1 is used as a Web call center.

In the present embodiment, an indication for the call center to call is transmitted by clicking a portion of an inquiry for a call center linked to the website displayed on mobile phone apparatus 2a, personal computer 2ba, 2e, 2fa and of voice communication connection request organization 2. On the call center side, an operator can take a call as before using a key telephone system connected to a normal private branch exchange. If there is a call center inside of the supporting system 1, a telephone charge is not charged from a CTI server 6a to a telephone apparatus 3d of the call center because of an intra-company call communication. In addition, the charge becomes cheaper when a user calls from a mobile phone apparatus connected to a PBX 6aa to a mobile phone apparatus 2a. In addition, a plurality of supporting systems may exist via the Internet as the supporting system 1a. As communication steps, it is preferable that, when the supporting system 1 receives an indication from the user, first, the telephone apparatus of the operator of the call center is called, then the telephone apparatuses 2a, 2bb, and 2fb on the user side are called. Communication begins when both of them take calls . In addition, when lines of the call center side are fully occupied, it is preferable that the support center detects this situation and sends a message stating "Lines are currently busy, please call back after one moment." to the user.

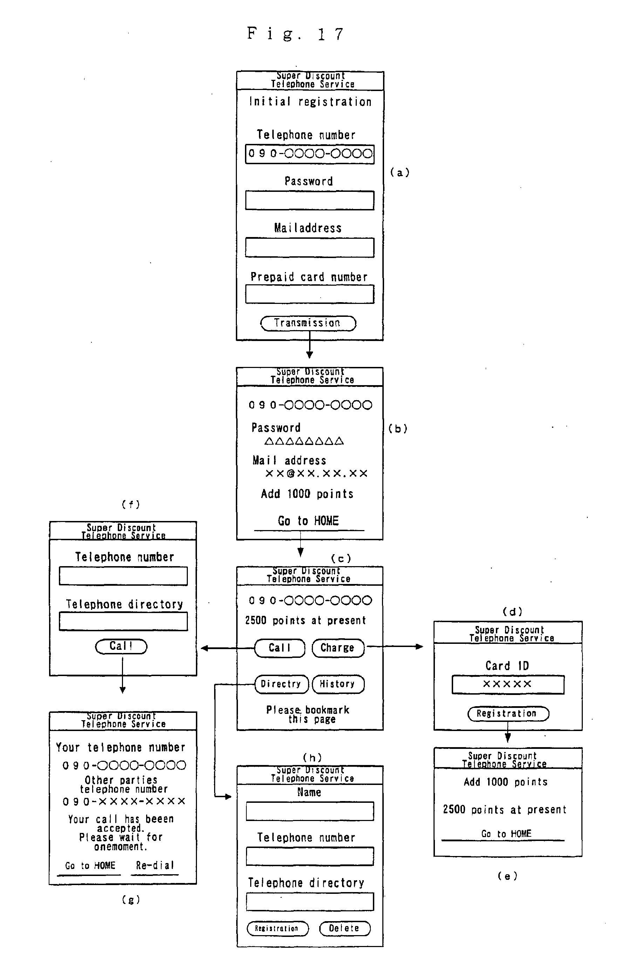

Next, another embodiment which differs from that of Fig. 3 will now be explained in accordance with Fig. 17.

In order to utilize the service, first user registration is made as shown in Fig. 17 (a).

For example, when connecting to a website of the supporting system 1 shown on a prepaid card through a mobile phone apparatus compatible with i-mode 2a as a voice communication connection request organization 2, initial registration application procedures as shown in Fig. 17 (a) are displayed on the website . Blank spaces for inputting telephone numbers (ID), password, mail addresses, and a card ID of a prepaid card or the like, and a "transmission" button are listed. in the application procedures.

Next, the user inputs telephone numbers of mobile phone apparatus 2a currently in use, alphanumeric characters the user wishes to use as a password, a mail address, and a card ID of a prepaid card into the blank spaces of the registration application procedures for initial registration shown in Fig. 17 (a), then presses a "transmission" button under the prepaid card number of Fig. 17 (a). In response to this, a WEB server 7, a DB server 8, an application server 9, a mail server 10, and a router 11 and, if necessary, a translation server 19 of the supporting system 1 operate to carry out user registration for initial registration, send a registration confirmation screen including a new registration screen as shown in Fig. 10 (b) to the mobile phone apparatus 2a, inform input items in initial registration to the user, and inform that service is available for use returning to the website of the supporting system 1 to the voice communication connection request organization 2 as a user. A page of a super discount telephone service shown in Fig. 17 (c) is called by clicking a link of "go to HOME" here. User data, chargeable point counts of a prepaid card, a call button, a charge button, a telephone directory button and a history button are displayed on the page. Further, in HTML on this page, information of the telephone number and password are buried in portions of <INPUT TYPE = "HIDDEN" NAME = "TEL" VALUE="090xxxxxxx"> and <INPUT TYPE = "HIDDEN" NAME = "PASSWORD" VALUE = " ΔΔΔΔΔΔΔΔ ">. In addition, when speaking over the telephone, it is preferable to register the page on the bookmark and retrieve it from the bookmark.

The user confirms chargeable point counts of the current prepaid card, and when the point counts show a slight deficiency, presses the charge button on the screen shown in Fig. 17 (c) to display a screen of Fig. (d), purchase a new prepaid card, inputs a card ID number of a new prepaid card, and presses the "registration" button. Thus, a screen which shows new additional points: 1000 and total available points for use: 2500 as shown in Fig. 17 (e) is sent to the mobile phone apparatus 2a. When pressing the website button on the screen, the screen returns to Fig. 17 (c).

Subsequently, the user presses a call button of the screen shown in Fig. 17 (c) to input the other party. When pressing a call button, a screen for the other party input shown in Fig. 17 (f) is sent to the mobile phone apparatus 2a from the supporting system 1, therefore the user newly inputs the telephone number of the other party into the blank spaces, and selects and specifies the telephone number of the other party from the telephone directory box. The telephone number of the other party is automatically recorded in the telephone directory box when the communication is carried out once. Thus, after selecting and specifying the telephone number of the other party, when the call button of the screen of Fig. 17 (f) is pressed, a screen to inform a communication request reception shown in Fig. 17 (g) is sent to the mobile phone apparatus 2a from the supporting system 1. The user and the telephone number of the other party are displayed on the screen, and a message stating "Your call is accepted. Please wait one moment. " is also displayed. While watching the screen, the user waits for a moment, and then the supporting system 1 calls the other party, and connects to both of them to enable a call, so the call becomes available when a call from the supporting system 1 is received. In addition, if the communication is disconnected during midstream, when clicking a re-dial button at the bottom of the screen shown in Fig. 17 (g), since the user and the telephone number of the other party displayed on the screen are buried in the re-dial button, the information is sent to the supporting system 1. Thus, it is not required to repeat steps from Fig. 17 (c), and the supporting system 1 operates a re-dial so that the user can reopen the call to the same other party with a touch of a screen, and enables to reopen the call. In addition, in a case of making a new entry of the other party in the telephone directory or a deletion, since a screen for the telephone directory shown in Fig. 17 (h) is sent to the mobile phone apparatus 2a from the supporting system 1 by pressing the telephone directory button on the screen of Fig. 17 (c), when making a new entry of the other party, the user newly inputs names and telephone numbers of the other party into blank spaces, and presses the registration button for registration at the bottom of the screen. On the other hand, when deleting the other party from the telephone directory, the user selects the telephone number of the other party from the telephone directory list box, and presses the delete button to delete at the bottom of the screen.

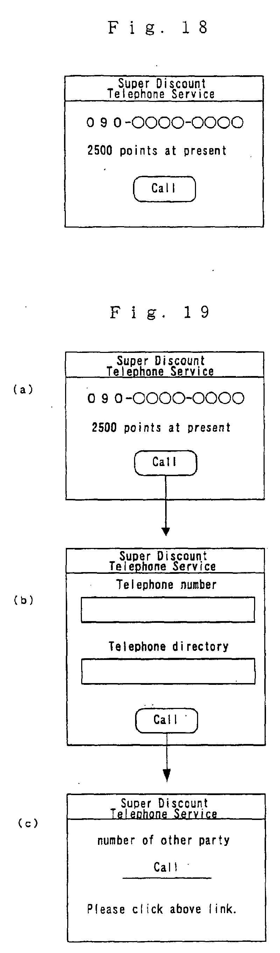

Next, in an initial connection of a voice communication connection request organization 2 and a voice communication call organization 3, a case where the supporting system 1 connects to both of the voice telephone apparatuses, when the voice telephone apparatus of the voice communication call organization 3 is called and a response is received, while maintaining a connection with a voice telephone apparatus of the voice communication connection request organization 2, will be explained in accordance with Fig. 18 through Fig. 20.

Fig. 18 shows a case where the voice communication connection request organization 2 performs a communication according to a dial indication from the supporting system 1 without disconnecting a telephone connection to the supporting system 1. For example, in initial registration to the supporting system 1 using the mobile phone apparatus compatible with i-mode 2a as the voice communication connection request organization 2, a page of Fig. 18 is registered as a bookmark. User data, chargeable point counts of a current prepaid card, and a call button are displayed on this page. Further, in HTML on this page, information of the telephone number of the voice communication connection request organization 2 is buried in the parts of <INPUT TYPE = "HIDDEN" NAME = "TEL" VALUE = "090xxxxxxx">.

Then, when utilizing the service, the user calls a page of Fig. 18 from the bookmark using the mobile phone apparatus compatible with i-mode 2a and presses a call button. Thus, the mobile phone apparatus 2a calls the supporting system 1. As telephone numbers for use in a call of the supporting system 1 in this case, it is preferable that it is a free dial or an international free dial. Concretely, a link of the telephone number of the call button is, for example, <A href = "tel: 0120xxxxxxxx"> communication </A>, which shows the free dial.

The supporting system 1 that receives a call specifies the voice communication connection request organization 2 according to a sender number notice of the mobile phone apparatus 2a, by allocating the telephone number of the free dial of the supporting system 1 to each user, specifies the voice communication connection request organization 2 based upon the free dial number which makes the call.

Subsequently, when chargeable point counts of the current prepaid card, which the voice communication connection request organization 2 holds, are insufficient, the supporting system 1 sends a message that remaining point counts are insufficient to the voice communication connection request organization 2, and hangs up the telephone.

When the chargeable point counts of the current prepaid card, which the voice communication connection request organization 2 holds, are sufficient, while maintaining a connection state with the voice communication connection request organization 2, the supporting system 1 indicates the voice communication connection request organization 2 to input the telephone number of the voice communication call organization 3, which requests the connection by voice. The voice communication connection request organization 2 pushes and informs the telephone number of the voice communication call organization 3 to the supporting system 1. The supporting system 1 calls the dialed telephone number through the other line, after the voice communication call organization 3 takes the call and the connection is established, connects both lines to enable the voice communication connection request organization 2 and the voice communication call organization 3 to speak, and starts charging at the same time when the communication begins similar to the embodiment described above.

Thus, the voice communication connection request organization 2 can receive connection service to the voice communication call organization 3 from the supporting system 1 without disconnecting the telephone connection to the supporting system 1.

Fig. 19 shows a case where the voice communication connection request organization 2 communicates by indicating the supporting system 1 to input the telephone number of the voice communication call organization 3, which requests the connection through, for example, the mobile phone apparatus compatible with i-mode 2a without disconnecting the telephone connection to the supporting system 1.

In initial registration to the supporting system 1 by the mobile phone apparatus compatible with i-mode 2a as the voice communication connection request organization 2, a page shown in Fig. 19 (a) similar to Fig. 18 is registered as a bookmark. User data, chargeable point counts of a current prepaid card, and a call button are displayed on this page. Further, in HTML on this page, information of the telephone number of the voice communication connection request organization 2 is buried in the parts of <INPUT TYPE = "HIDDEN" NAME = "TEL" VALUE = "090xxxxxxx">.

When utilizing the service then, a page of Fig. 19 (a) is called from the bookmark using the mobile phone apparatus compatible with i-mode 2a and the call button is pressed.

In response to this, a WEB server 7, a DB server 8, an application server 9, a mail server 10, and a router 11 and if necessary, a translation server 19 of the supporting system 1 operate to carry out user registration for initial registration, and send a screen for use in specifying the other party as shown in Fig. 19 (b) to the mobile phone apparatus 2a . The user newly inputs the telephone number of the other party into the blank spaces then, and selects and specifies the telephone number of the other party from the telephone directory box. The telephone number of the other party is automatically recorded in the telephone directory box when communication is carried out once. Thus, after selecting and specifying the telephone number of the other party, when the call button of the screen of Fig. 19 (b) is pressed, the supporting system 1 stores the telephone number of the specified other party in Fig. 19 (b), further, sends a screen which shows the other party number and a link destination, for example, <A href = "tel: 0120xxxxxxxx"> communication </A>, which indicates the free dial as shown in Fig. 19 (c) to mobile phone apparatus 2a.

Then, when the user specifies a link destination, the free dial of the supporting system 1 is called, the supporting system 1 that receives a call specifies the voice communication connection request organization 2 according to a sender number notice of the mobile phone apparatus 2a, by allocating the telephone number of the free dial or the like of the supporting system 1 to each user, specifies the voice communication connection request organization 2 based upon the free dial number which makes the call.

Subsequently, when chargeable point counts of the current prepaid card, which the voice communication connection request organization 2 holds, are insufficient the supporting system 1 sends a message that the remaining point counts are insufficient to voice communication connection request organization 2, and hangs up the telephone.

When the chargeable point counts of the current prepaid card, which the voice communication connection request organization 2 holds, are sufficient, the supporting system 1, while maintaining the connection to the voice communication connection request organization 2, calls the telephone number of the voice communication call organization 3, to which the voice communication connection request organization 2 indicated in Fig. 19 (b) requests the connection through the other line, and connects both lines to enable the voice communication connection request organization 2 and the voice communication call organization 3 to speak, starts charging at the same time when the communication begins similar to the embodiment described above after the voice communication call organization 3 takes the call and the connection is established.

Thus, the voice communication connection request organization 2 can receive connection service to the voice communication call organization 3 from the supporting system 1 without disconnecting the telephone connection to the supporting system 1.

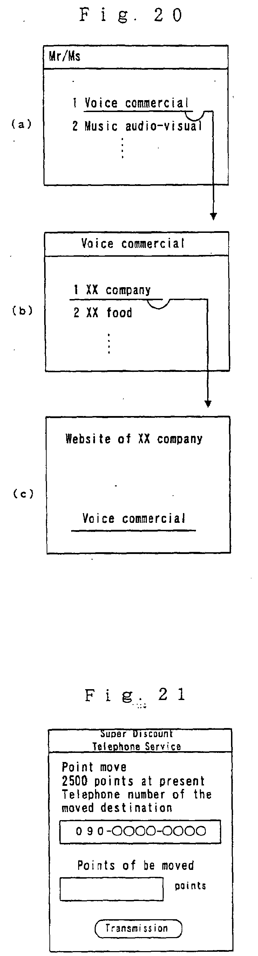

Fig. 20 shows a case of receiving a sound information offer service by calling a supporting system 1, for example, from a mobile phone apparatus compatible with i-mode 2a to the supporting system 1.

After initial registration for the sound information offer to the supporting system 1 by the mobile phone apparatus compatible with i-mode 2a as the voice communication connection request organization 2, the sound information offer page shown in Fig. 20 (a) is registered as a bookmark. User information is written in the bookmark. Additionally, buttons for a sound CM offer, a music trial listen offer or the like are displayed on the sound information offer page. On that screen, for example, when clicking the sound CM as a requested object from the sound information offer page, a sound CM page to be a selection object shown in Fig. 20 (b) is opened, the button of a sponsor providing the sound CM is shown. When, for example, clicking the button of the sponsor as a requested object from sponsors then, the CM page of the sponsor which is a selection object as shown in Fig. 20 (c) is opened, and the user clicks a button or a link of the sound information offer displayed as "sound CM". As a calling destination or a link destination, it is preferable that it is, for example, <A href = "tel: 0061800xxxxxx" sound CM</A>, which shows an international free dial or a free dial. Further, as the telephone number, it may be allocated to each user during each time. In this case, when the user does not access after a fixed time, it is preferable to release the allocation. At this time, checking the allocated phone number, the supporting system 1 side can determine which user wishes to listen to the sound CM of which programs. Of course, it is possible for the supporting system 1 side to specify the user by means of a sender number notice. In addition, the telephone number to be allocated may be allocated to each program. The supporting system 1 side provides the sound CM by specifying the program according to the telephone number which makes the call.

The WEB server 7 of the supporting system 1 receives a call in Fig. 20 (c), receives the mobile phone apparatus 2a and the requested program of the sound information of the user, and connects the program of the sound information, which the user requests, to the mobile phone apparatus 2a of the user while maintaining the connection thereof. When requested sound information is data in the supporting system 1, internal sound information 14 is connected immediately and offered to a user. When the sound information requested is data outside of the supporting system 1, after the CTI server 6a makes a call to telephone numbers of the external sound information to be the requested object and confirms the connection, the external sound information 17 and the portable telephone apparatus 2a are connected and the external sound information 17 is offered to the user.

The sound information offer is, for example, around 1 minute and may be preferably used as a company CM or a trial listen of a music CD or the like. In this case, the communication is automatically disconnected and the telephone charge is charged to the sponsor after the sound information is offered.

In addition, chargeable sound information is prepared and the voice communication connection request organization 2 that receives the sound information offer may be charged.

Fig. 21 shows other methods to increase the charging point. The method moves the point one user A holds to the other user B utilizing the supporting system 1.

The user A calls a point move page as shown in Fig. 21 from the website of the supporting system 1 using the mobile phone apparatus 2a which the user owns. When this is registered as a bookmark, the utilization from the second time becomes simple. Since the current point counts (for example, 2500) are displayed in Fig. 21, the user A inputs both the telephone number and point counts to be moved of the user B to move, and presses the transmission button, then the points are moved from the user A to the user B. Such charge point movement is preferable to be utilized in the case where it is difficult for the user B to purchase the prepaid card, and becomes necessary to urgently use the supporting system 1, however the charge point counts are few.

In addition, the other method for increasing the charge point counts other than the prepaid card is that the supporting system 1 connects an installed cash deposit machine (not shown) to the mobile phone apparatus 2a, the user puts cash into the cash deposit machine, after exchanging this with the charging point, wherein the user may add it to the charging point of the mobile phone apparatus 2a.

In addition, when converting the service point corresponding to the amount of purchased goods in a store with the charging point to be utilized, the user may connect the mobile phone apparatus 2a to a converter and add the converted charge point to the mobile phone apparatus 2a.

In addition, when the user clicks a website advertisement or an E-mail advertisement using the mobile phone apparatus 2a, the charge point counts may be added as a bonus.

In addition, the charging point may be used as a payments point except for the telephone charge. For example, the charging point may be used as a payment for goods of a mail order on the Internet. Further, in stores, the charging point corresponding to a utilization price may be utilized in payment by connecting the mobile phone apparatus 2a to an automatic dispenser, a personal computer or the like.

In addition, a plurality of supporting systems may be arranged to mutually back up charge data and log data. Further, main database servers may be individually installed to receive data from a plurality of supporting systems at once.

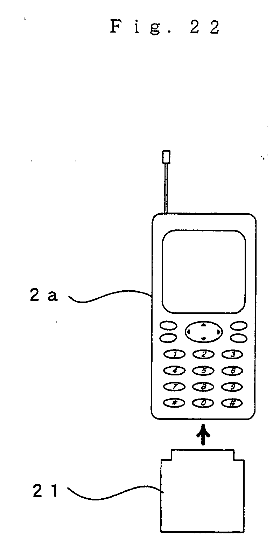

In addition, in using the mobile phone apparatus 2a, utilization operability of the supporting system is further improved when operation auxiliary equipment 21 shown in Fig. 22 is inserted into the interface portion of the mobile phone apparatus 2a.

Referring to functions of the operation auxiliary equipment 21, they are first, reading the telephone number of the mobile phone apparatus 2a automatically, to which the operation auxiliary equipment 21 is attached, second, calling automatically to the set telephone number and connecting automatically to the set website, third, an automatic transmission of preset data (unique number, credit card number, ID, password, etc.), the effective frequency, and readout telephone number of the mobile phone apparatus 2a after the connection to the supporting center 1, fourth, disconnecting the communication due to DTMF signal or the like from the supporting system 1 or the other party during the communication, and displaying the set website automatically, fifth, temporarily recording the dial input of the user, and transmitting the recorded dial to the supporting system 1 after connecting to the supporting system 1, sixth, indicating automatic transmission of the predetermined E-mail to the mail address of the user registered beforehand.

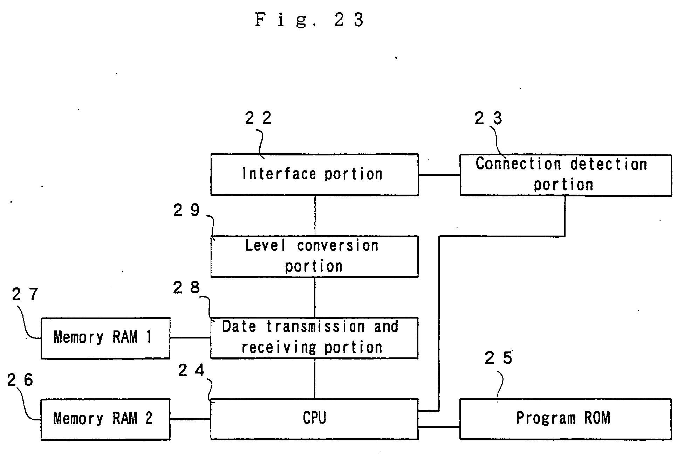

Configuration and functions of the operation auxiliary equipment 21 will be explained in accordance with a block diagram of Fig. 23. When the operation auxiliary equipment 21 is connected to the mobile phone apparatus 2a with an interface portion 22, a connection detection portion 23 detects the connection, and transmits to a CPU 24. After converting data incorporated into a memory RAM 26 or a memory RAM 27 into a signal level required for connection to the mobile phone apparatus 2a via a data transmission portion 28 and a level conversion portion 29 according to content of the preprogrammed program ROM 25, the CPU 24 transmits it to the mobile phone apparatus 2a through the interface 22. Thus, the operation auxiliary equipment 21 performs a series of automatic operations of the mobile phone apparatus 2a described above while sending and receiving data between the mobile phone apparatus 2a. The memory RAM 27 is constructed to store the data from the mobile phone apparatus 2a temporarily. In addition, the memory RAMs 26 and 27 may be constructed as one. As the memory, many types of memory such as flash memory or nonvolatile RAM are considered.

A case of automatically calling a website of the supporting system 1 using the operation auxiliary equipment 21 will be explained.

First, when being inserted into the interface portion of the mobile phone apparatus 2a, the operation auxiliary equipment 21 automatically reads the telephone number of the mobile phone apparatus 2a, and automatically calls the website of the supporting system 1. The telephone number being read of the mobile phone apparatus 2a is then automatically transmitted. Thus, the website peculiar to a user shown in Fig. 17 (c) is displayed on the mobile phone apparatus 2a. The later operation is the same as a case without using the operation auxiliary equipment 21. In addition, it is preferable to provide operation auxiliary equipment 21 with an effective frequency of the prepaid card, to transmit the effective frequency as well in the auto calling of the website only initially, and to carry out an initial auto registration to the supporting system 1. It is preferable that registration of the effective frequency to the supporting system 1 cannot be made after a second time. Since the website peculiar to the user shown in Fig. 17 (c) is displayed only by inserting the operation auxiliary equipment 21 from the second time, various operations can be carried out from here.

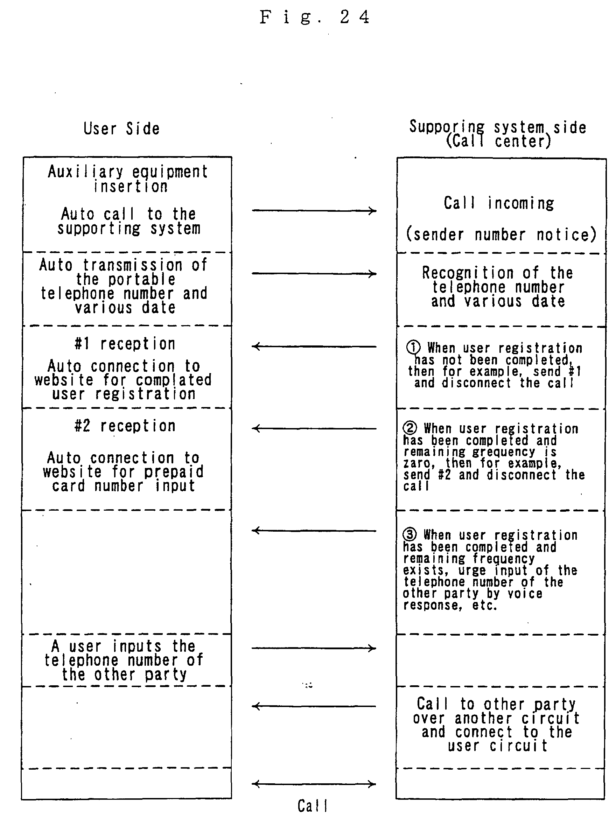

Next, a case of the auto-dial to the telephone number of the supporting system 1 using the operation auxiliary equipment 21 will be explained in accordance with Fig. 24.

It is preferable that the supporting system 1, in this case, is a free dial or an international free dial.

First, the operation auxiliary equipment 21 reads out the telephone number of the mobile phone apparatus 2a when inserted into the interface portion of the mobile phone apparatus 2a, and performs the auto-dial to set supporting system 1. After the connection, the operation auxiliary equipment 21 automatically transmits the readout telephone number of the mobile phone apparatus 2a, which the supporting system 1 automatically recognizes. User registration may then be made with the telephone number and the effective frequency automatically.

In the case of an unregistered user without making registration automatically, the supporting system 1 transmits the signal to inform the mobile phone apparatus 2a that the communication is disconnected. The mobile phone apparatus 2a receives the signal, calls the website of user registration automatically, and urges the user to register.

When user registration is completed but the effective frequency is not left, the signal is sent to the mobile phone apparatus 2a to inform that the communication is disconnected. The mobile phone apparatus 2a side receives the signal, calls the website to input the prepaid card number automatically, and urges the user to input the card number.

When user registration is completed, if the effective frequency is left, the supporting system 1 urges the user to input the telephone number of the other party by voice or the like. When the user inputs the telephone number of the other party, the supporting system 1 calls the other party through the other line, and connects both of them when the response is received to enable them to speak.

In addition, the supporting system 1 side can recognize the telephone number of the user by a sender number notice. In this case, the supporting system 1 side does not need to bear a charge for the call reception of the free dial since it recognizes the user without call reception.

In addition, another embodiment using the operation auxiliary equipment 21 is explained.

When the operation auxiliary equipment 21 is inserted into the interface portion of the mobile phone apparatus 2a, and the user inputs the telephone number of the other party, the operation auxiliary equipment 21 stores the telephone number in the memory RAM 27 temporarily, and transmits data such as both the memorized telephone number and the readout user telephone number of the mobile phone, a unique ID or the like to the supporting system 1 when connecting to the website for use in the communication. The supporting system 1 receives these, and a WEB server 7, a DB server 8, an application server 9, a CTI server 6a link to call the user and the other party, and enables them to speak to each other by connecting both of them. The charge is started simultaneously.

In addition, when the user inputs the telephone number of the other party, it is possible to eliminate time and trouble in dial input if the user inputs abbreviated numbers registered to the DB server 8 or the operation auxiliary equipment 21 beforehand, and the DB server 8 and the application server 9 link to convert the telephone number of the other party.

Further, by utilizing the keys of the mobile phone apparatus 2a such as "0, 1, 2, 3, 4, 5, 6, 7, 8, 9, *, #," when, for example, only the key "1" is inputted and transmitted to the supporting system 1, the DB server 8 may recognize it as "A" line (A,I,U,E,O), and connect to the website for communication displaying telephone directory data of "A" line. In this case, since the telephone directory of "A" line is displayed on the screen of the mobile phone apparatus 2a using a list box or the like, it is preferable for the user to select the other party among them and transfer it to the supporting system 1.

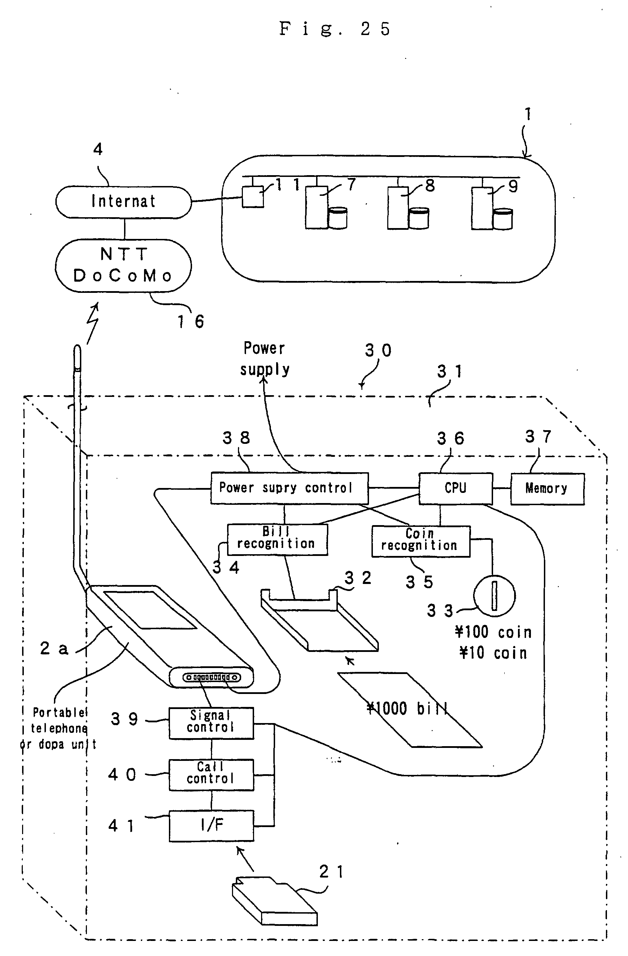

Fig. 25 shows a point adding device 30 to add a call point to the operation auxiliary equipment 21.

The mobile phone apparatus 2a, a Dopa unit or the like and the operation auxiliary equipment 21 can be detachably mounted in a housing 31 of the point adding device 30. In addition, a bill slot 32 and a coin slot 33 are set up on the front of housing 31. A bill recognition portion 34 and a coin recognition portion 35 to recognize whether the bill and the coin inserted is genuine and the amount of the money, respectively, are connected to each slot 32 and 33. Further, a CPU 36, a memory 37, and a power supply control 38 for controlling each recognition portion 34 and 35 are included. The mobile phone apparatus 2a and the operation auxiliary equipment 21 are connected via a signal control portion 39, a call control portion 40, and an interface 41. The CPU 36 control the operation of the signal control portion 39 and the call control portion 40.

Next, operation using the point adding device 30 and operation auxiliary equipment 21 will be explained.

First, when a bill or the coin is inputted into the bill slot 32 or the coin slot 33, the bill recognition portion 34 or the coin recognition portion 35 recognizes the inputted amount, and the CPU 36 stores it in the memory 37.

Next, when the operation auxiliary equipment 21 is inserted into the interface 41 in the housing 31, the call control portion 40 reads data in the operation auxiliary equipment 21, the power supply control 38 operates the built-in mobile phone apparatus 2a, and various recognition data in the operation auxiliary equipment 21, and data such as the inserted amount, ID of the point adding device 30, or the like are transmitted through the DoCoMo network 16 and the Internet 4 from the mobile phone apparatus 2a to the WEB server 7 of the supporting system 1. In the supporting system 1, the WEB server 7, a DB server 8, an application server 9 or the like operate, and the inserted amount is added to the operation auxiliary equipment 21 as the point. Subsequently, it is preferable to perform the operation for initially communication similar to that explained above.

In addition, the call point may be added in the memory RAMs 26 and 27 of the direct operation auxiliary equipment 21. In addition, instead of building the mobile phone apparatus 2a in the housing 31, PCs, built therein, may be constructed so as to connect to the Internet 4 via cables (telephone line or private line).

In addition, in the embodiments mentioned above, it is possible to make the cost required for communication of the voice communication connection request organization 2 charge free due to revenues by placing advertisements from sponsors on each portion of the website required for communication. For advertisements, instead of sponsors, advertisement by voice may be added before and after the communication.

In addition, by connecting the operation auxiliary equipment 21 to, for example, a USB of a PC 2ba, or a serial or parallel interface, then reading an ID or the like of the auxiliary equipment 21 automatically using software of the PC, authentication of the user registered beforehand, confirmation of the point, an increase and decrease of the point, and communication service or sound information offer may be provided. Further, software having a website display function equivalent to that of the displayed website by inserting the auxiliary equipment 21 into the mobile phone apparatus may be set up on a PC. For example, when the auxiliary equipment 21 is connected to a PC via a connection device, a website equivalent to that displayed on the screen of a mobile phone apparatus is displayed on the software on the PC, and the service may be received using an IP telephone software, an IP telephone apparatus, a fixed telephone or the like by pressing the link or the button therein to offer communication indication or sound information.

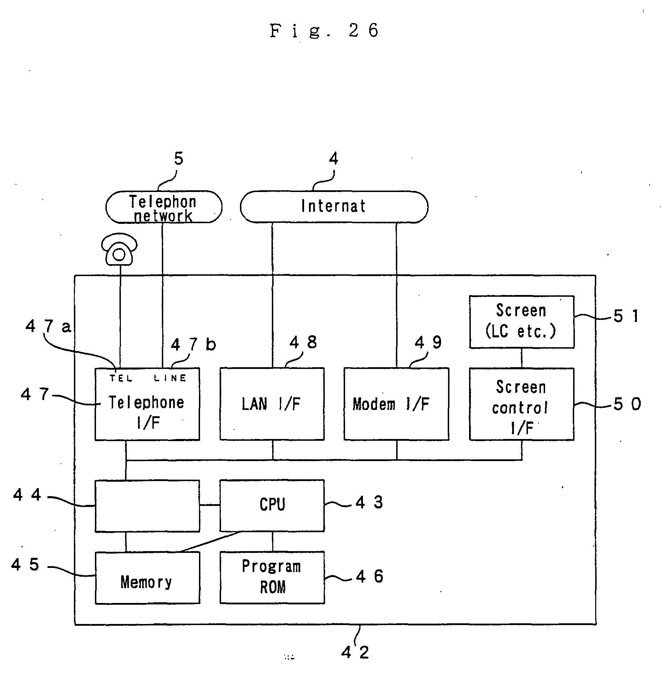

Fig. 26 shows an exclusive unit of the supporting system. The exclusive unit 42 provides a various kinds of services such as international telephone service by the supporting system, international free dial service, international teleconferencing service or the like.

The exclusive unit 42 including a CPU 43, an input/output unit 44, a memory 45, a program ROM 46, a telephone interface 47, a LAN interface 48, a modem interf ace 49, a screen control interface 50, and a screen 51 for display such as liquid crystal, etc., is constructed so as to connect to external equipment by an external telephone apparatus connection terminal (TEL) 47a and an external telephone network terminal (LINE) 47b of the telephone interface 47, a LAN terminal 48a of the LAN interface 48, and a modem terminal 49a of the modem interface 49. In addition, a telephone apparatus may be built-in, and the screen 51 for display may be freely constructed so as to connect to ones externally arranged. In addition, a personal computer may be connected as well. In addition, it may be also modified.

It is preferable to carry out user registration beforehand from the connected telephone apparatus to the present exclusive unit 42. Concretely, the telephone number of the user, the prepaid card number or the like are registered using the keys "0, 1, 2, 3, 4, 5, 6, 7, 8, 9, *, #" of the telephone apparatus. In addition, it is preferable to register an IP address, an Internet connection ID, and password. In addition, it is also possible to mount the voice response unit for use in the registration.

In the LAN connection, if it is installed as DHCP compatible, it is not necessary to register the IP address allowing greater convenience.

In addition, it is preferable to set the ID number peculiar to the unit, the IP address of the supporting system on the Internet, the telephone number, the Internet connection ID, and password, etc., in the present exclusive unit 42 to be stored in the memory. A user may be able to change these. It is preferable that various registration data may be registered to the server by connecting thereto at any time.

Next, a method of use of the exclusive unit 42 is explained.

First, the user completes user registration. For example, referring to a case where international communication is carried out, is explained as follows.

An identification code using this exclusive unit 42 for communication is set beforehand. For example, when calling the Philippines, by dialing a number consisting of "111632xxxxxxx" adding "111" to the head, or dialing a number consisting of "632xxxxxxx*" adding "*" to the end, it is recognized that communication using the exclusive unit 42 is selected. If the dial input is received, the input number is temporarily stored in the memory 45 via the telephone interface 47 and the input unit 44. Next, according to the program ROM 46, the CPU transmits telephone numbers of the user whose user registration is completed, telephone numbers input as the other party, a prepaid card number, a unit number of exclusive unit 42 or the like through the LAN interface 48 or the modem interface 49 to the supporting system on the preset Internet . A series of data and information in progress inputted by the user are outputted in a timely manner to the screen for use in display.

The supporting system recognizes the user by the unit number and the user telephone number, the user ID, password, etc., if there is a point left and it is not illegal, sends call origination to the two telephone numbers and enables communication, and provides various services described above. In addition, when the number of the prepaid card is recognized and it is a correct number, then the point is added. Further, if there is no point left, it may notice as such by a vice announcement. In addition, if the supporting system side is busy, it may notice as such by an LED or the like.

It is to be understood that a cash on delivery system for charges based upon a communication log of the supporting system side is possible instead of a prepaid system. In addition, it is also possible to use by selecting communication via the supporting system and communication via an Internet telephone by mounting the Internet telephone unit onto the exclusive unit 42.

In addition, the present invention is not limited to the preferred embodiments described above and can be changed depending upon the need. In addition, it is to be understood that there is a case where the system may achieve high convenience when one part or all of the embodiments are combined.

## Claims

1. A voice communication connection/charging proxy support system comprising: connection request reception means for receiving on the website a connection request specifying a voice communication call organization from a voice communication connection request organization; call connection means for calling both of the voice telephone apparatuses of the voice communication connection request organization and the voice communication call organization, and if a response is received from both of them, connecting their voice telephone apparatuses to each other; and charging means for charging a beneficiary organization a telephone charge corresponding to the duration of a call through both of the voice telephone apparatuses after the connection.

2. A voice communication connection/charging proxy support system, comprising: connection request reception means for receiving on the website a connection request specifying a voice communication call organization from a voice communication connection request organization; call connection means for calling, while maintaining a connection with the voice telephone apparatus of the voice communication connection request organization, the voice telephone apparatus of the voice communication call organization, and if a response is received from it, connecting both of the voice telephone apparatuses to each other; charging means for charging the beneficiary organization a telephone charge corresponding to the duration of a call via both of the voice telephone apparatuses after the connection.

3. The voice communication connection/charging proxy support system according to Claim 1 or Claim 2, wherein the beneficiary organization which the charging means charges the telephone charge is either one or both of the voice communication connection request organization or the voice communication call organization.

4. The voice communication connection/charging proxy support system according to one of Claim 1 through Claim 3, wherein the voice communication call organization is constructed to be able to offer sound information.

5. The voice communication connection/charging proxy support system according to one of Claim 1 through Claim 4, wherein the voice communication connection request organization specifies the voice communication call organization by a mobile phone apparatus, a wireless apparatus, a PDA or the like having a connection function to the Internet.

6. The voice communication connection/charging proxy support system according to Claim 5, specifying the voice communication call organization by automatically calling the website of the supporting system on the mobile phone apparatus or by connecting operation auxiliary equipment which automatically dials to the supporting system.
